(19) Europäisches Patentamt / European Patent Office / Office européen des brevets

(11) **EP 3 680 104 B1**

(12) **EUROPÄISCHE PATENTSCHRIFT**

(45) Veröffentlichungstag und Bekanntmachung des Hinweises auf die Patenterteilung:
**09.03.2022   Patentblatt 2022/10**

(21) Anmeldenummer: **20150954.4**

(22) Anmeldetag: **09.01.2020**

(51) Internationale Patentklassifikation (IPC):
**B32B 27/36** (2006.01)        **B29C 55/00** (2006.01)
**B29D 7/01** (2006.01)        **B32B 7/023** (2019.01)
**B32B 27/08** (2006.01)        **B32B 27/18** (2006.01)
**B65D 65/40** (2006.01)        **C08G 63/183** (2006.01)
**C08J 5/18** (2006.01)        **C08L 67/02** (2006.01)

(52) Gemeinsame Patentklassifikation (CPC):
(C-Sets verfügbar)
**B29C 55/143; B29C 55/005; B29D 7/01;**
**B32B 7/023; B32B 27/08; B32B 27/18;**
**B32B 27/36; B65D 65/40; C08G 63/183;**
**C08J 5/18; C08L 67/02;** B29K 2067/003;
B29K 2067/006; B32B 2250/03; B32B 2250/244;
(Forts.)

(54) **PACKUNG AUS POLYESTER MIT EINER THERMOFORMBAREN UNTERFOLIE UND EINER SIEGEL- UND PEELBAREN OBERFOLIE, VERFAHREN ZU IHRER HERSTELLUNG UND IHRE VERWENDUNG**

POLYESTER PACKAGE COMPRISING A THERMOFORMABLE BASE FILM AND A SEALABLE AND PEELABLE TOP FILM, METHOD FOR THE PRODUCTION OF SAME AND USE THEREOF

EMBALLAGE DE POLYESTER DOTÉ D'UNE FEUILLE INFÉRIEURE THERMOFORMABLE ET D'UNE FEUILLE SUPÉRIEURE SCELLABLE ET PELABLE, SON PROCÉDÉ DE FABRICATION ET SON UTILISATION

(84) Benannte Vertragsstaaten:
**CZ DE FR GB LU PL**

(30) Priorität: **14.01.2019   DE 102019200365**

(43) Veröffentlichungstag der Anmeldung:
**15.07.2020   Patentblatt 2020/29**

(73) Patentinhaber: **Mitsubishi Polyester Film GmbH**
**65203 Wiesbaden (DE)**

(72) Erfinder:
• **Peiffer, Herbert**
  **55126 Mainz (DE)**
• **Jesberger, Martin**
  **55128 Mainz (DE)**
• **Kuhmann, Bodo**
  **65594 Runkel (DE)**
• **Audörsch, Stephan**
  **64283 Darmstadt (DE)**

(74) Vertreter: **Schweitzer, Klaus**
**Plate Schweitzer Zounek**
**Patentanwälte**
**Rheingaustrasse 196**
**65203 Wiesbaden (DE)**

(56) Entgegenhaltungen:
**EP-A1- 1 471 098        EP-A1- 3 584 079**
**DE-A1- 10 318 102**

EP 3 680 104 B1

(52) Gemeinsame Patentklassifikation (CPC): (Forts.)
B32B 2264/02; B32B 2264/0214; B32B 2264/10;
B32B 2264/102; B32B 2264/12; B32B 2270/00;
B32B 2307/31; B32B 2307/412; B32B 2307/518;
B32B 2439/70; C08J 2367/02

C-Sets
**C08L 67/02, C08L 23/0823**

**Beschreibung**

**Patentfamilie**

Die Erfindung betrifft eine transparente Packung enthaltend eine biaxial orientierte, thermoformbare Polyesterfolie als Unterfolie und eine biaxial orientierte, heißsiegelfähige und peelbare Polyesterfolie als Oberfolie. Die thermoformbare Unterfolie dient zur Aufnahme von Lebensmittel, z,B. Fleisch, Fisch oder Geflügel. Die Oberfolie dient zur Abdeckelung der Unterfolie und wird auf diese mittels Wärme fest aufgesiegelt. Die Packung weist ein self-venting (Selbst-Belüftung/Selbst-Öffnung) auf, wenn sie z.B. im Ofen, in der Mikrowelle oder im Kontaktgrill bei hoher Temperatur gegart wird. Nach dem Garen kann die Oberfolie von der Unterfolie mit einer mittleren Kraftanstrengung abgezogen - gepeelt - werden. Die Erfindung betrifft weiterhin ein Verfahren zur Herstellung der Packung und ihre Verwendung.

**Hintergrund**

Transparente Menüschalen, die aus thermoformbarem Polyester, wie z.B. a-PET oder modifiziertem boPET, unter Anwendung von Vakuum hergestellt und nach Befüllung mittels Lebensmittel mit einer auf den Rand der Menüschale unter Temperatureinwirkung aufgesiegelten Folie verschlossen werden, finden ihren Einsatz insbesondere bei Fleisch, Fisch, Geflügel und trockenen Fertigprodukten wie Sandwiches, Burger oder Wraps. Das Zubereiten der Produkte in solchen Packungen wird als sauber und hygienisch angesehen und erfreut sich deshalb einer großen Beliebtheit.

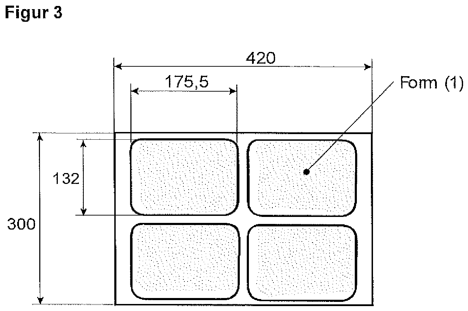

Eine wirtschaftliche Methode, hygienische Packungen für die Verarbeitung von Fleisch, Fisch oder Geflügel herzustellen, besteht in der Anwendung von Vakuumverfahren, z.B. mittels Multivac-Maschinen. Hierbei wird die fertige Packung allgemein wie folgt hergestellt: Die Folie für die Herstellung der Menüschale - auch mit Unterfolie bezeichnet - wird als Rolle in den vorderen Bereich der Maschine eingespannt. Über eine oder mehrere Vakuumkammern wird die Folie bis zu einer gewünschten Tiefe durch Anwendung von Temperatur und Vakuum thermogeformt (auch mit Tiefziehen bezeichnet). Nach dem Stand der Technik (siehe z.B. die EP 1 697 129 B1) lassen sich z.B. bei der Verwendung von Laminaten aus Polyester und Polyamid Tiefen bis zu ca. 70 mm realisieren (Format, siehe Figur 3). Danach erfolgt das Einlegen des Lebensmittelproduktes in die Menüschale, zumeist händisch. Über eine weitere Rolle wird die Deckelfolie - auch mit Oberfolie bezeichnet - der Menüschale zugeführt und auf deren Rand unter Anwendung von Temperatur und Druck fest versiegelt. Dieser Verfahrensschritt geschieht zumeist wiederum unter Vakuum, in dem sich die gesamte Packung befindet. Danach erfolgt die Konfektionierung in einzelne Packungen, verbunden mit weiteren nachfolgenden Einzeloperationen, wie die Bedruckung oder die Etikettierung der Verpackung.

EP 1 471 098 A1 und DE 103 18 102 A1 offenbaren coextrudierte, peelfähige, transparente und biaxial orientierte Polyesterfolien mit einer Basisschicht (B) und mindestens einer auf dieser Basisschicht (B) aufgebrachten Deckschicht (A). Die Deckschicht (A) ist heisssiegelbar und zeichnet sich durch eine leichte bis feste Peelbarkeit, insbesondere zu APET/CPET-Menüschalen (APET = amorphes Polyethylenterephthalat (PET); CPET = kristallines PET), aus.

Bestimmte Produkte werden vorgegart; dies geschieht z.B. in einem Wasserbad bei 85 °C über eine Verweildauer von bis zu 6 Stunden. Die Packungen werden - vorgegart oder nicht vorgegart - eingefroren und gelangen dann in den Handel. Beim Verbraucher wird die Packung aufgetaut und im Backofen bei Temperaturen bis zu 220 °C über eine bestimmte Zeit gegart. Die Garzeit richtet sich im Wesentlichen nach der Packungsgröße (entspricht der Masse des Lebensmittel in der Packung) und beträgt etwa 30 min bis zu zwei Stunden. Die Packung wird dazu verschlossen in den vorgeheizten Backofen gelegt (cook-in), wo sie sich - idealerweise nach 5 bis 10 min Verweilzeit - selbsttätig in der Siegelnaht öffnet (sogenanntes self-venting).

Bei der Entwicklung von neuen Packungen mit verbesserter Funktionalität oder modifiziertem Design ist das self-venting ein Muss. Durch die selbsttätige Öffnung der Siegelnaht - im Wesentlichen infolge des in der Packung aufgebauten Dampfdruckes

- entweicht der Wasserdampf aus der Packung und das Produkt wird - wie vom Verbraucher gewünscht - knusprig braun. Nach Ablauf der Garzeit wird die Oberfolie
- zumeist im heißen Zustand - von der Menüschale - ohne dabei zerstört zu werden
- abgezogen und der Inhalt der Packung steht für den Verzehr zur Verfügung.

Die Heißversiegelung der transparenten Menüschale aus thermoformbarem Polyester mit der Oberfolie - ebenfalls aus Polyester - erfolgt bei Siegeltemperaturen zwischen 120 und 220 °C. Eine Wirtschaftlichkeit des Verfahrens ist gegeben, wenn die Siegelzeit auf 3 Sekunden und weniger beschränkt werden kann. Zur Versiegelung von Unter- und Oberfolie gibt es verschiedene Möglichkeiten. Im vorliegenden Fall sind beide, sowohl die Unter- als auch die Oberfolie aus Polyesterpolymeren (= monopet oder Einstoffverpackung) aufgebaut, wobei die Oberfolie die siegelfähige und peelbare Variante darstellt.

Die aus beiden Folien hergestellte erfindungsgemäße Packung zeigt beim Garen das gewünschte self-venting.

Das self-venting wird erzielt, wenn die Siegeleigenschaften der Oberfolie auf die Unterfolie entsprechend abgestimmt sind.

Vom Markt werden hohe optische Anforderungen an die beiden Folien der Packung gestellt, insbesondere an die Trübung, die Clarity und den Glanz. Damit der Packungsinhalt (entspricht der Größe des Lebensmittels) gut zu erkennen ist, sollte die Trübung der Packung < 20 % und die Clarity der Packung > 70 % sein. Außerdem soll die Packung den Betrachter optisch ansprechen. Dazu werden hohe Glanzwerte der Packung angestrebt.

Daneben wird von der Packung eine hohe Durchstoßfestigkeit gefordert, damit sie den Transport und die Lagerung im Kaufhaus ohne Beschädigungen überstehen kann.

## Stand der Technik

Packungen aus thermoformbarer Unterfolie und siegelbarer Oberfolie sind bekannt.

In der EP 1 697 129 B1 wird ein thermoformbares Folienlaminat beschrieben, das eine thermoformbare Folienschicht (a), eine Strukturfolienschicht (b), eine heißsiegelfähige Schicht (c) und gegebenenfalls eine Barriereschicht (d) umfasst. An der ersten Oberfläche der thermoformbaren Folienschicht (a) grenzt die Strukturfolienschicht (b) an und an der gegenüberliegenden, zur Packungsinnenseite gerichteten, zweiten Oberfläche, befindet sich die heißsiegelfähige Schicht (c). Die thermoformbare Folienschicht (a) weist eine Polymerzusammensetzung auf, die mindestens 80 Gew.-% Polyethylenterephthalat umfasst. Die Strukturfolienschicht (b) kann eine Reihe von Polymeren umfassen, vorzugsweise enthält sie ein Polyamid. Die heißsiegelfähige Schicht (c) kann ebenfalls eine Reihe verschiedener Polymere umfassen, vorzugsweise enthält sie einen amorphen Polyester. Das Laminat ist für die eingangs genannte Anwendung geeignet, es ist aber verbesserungswürdig in der Thermoformbarkeit, der Durchstoßfestigkeit, vor allem aber verbesserungswürdig in den optischen Eigenschaften, wie Trübung, Clarity und Glanz.

In der EP 1 945 512 B1 wird ein Verfahren zum Verpacken von Fisch oder Fleisch beschrieben, das im Wesentlichen die Schritte umfasst, die eingangs in der vorliegenden Anmeldung genannt wurden: (i) Bereitstellen eines thermoformbaren polymeren Aufnahmefilms (= Unterfolie) und eines polymeren Abdeckfilms (= Oberfolie). Der Aufnahmefilm besteht aus einem Einzelschicht-Polyester- oder Polyamidsubstrat und der Abdeckfilm ist vorzugsweise aus Polyesterpolymeren aufgebaut. Zumindest eine der beiden Oberflächen des Aufnahme- und des Abdeckfilms hat eine heißsiegelfähige Oberfläche, (ii) Bereitstellen eines erhöhten äußeren Teils und eines vertieften mittleren Teils in dem Aufnahmefilm durch Thermoformen. (iii) Anordnen einer Portion Fleisch oder Fisch auf der inneren (= ersten) Oberfläche des Aufnahmefilms. (iv) Anordnen des Abdeckfilms über der Portion Fleisch oder Fisch, so dass die innere (= erste) Oberfläche des Abdeckfilms der inneren Oberfläche des Aufnahmefilms zugewandt ist. (v) In Kontaktbringen der Randabschnitte der ersten Oberfläche des Aufnahmefilms und der ersten Oberfläche des Abdeckfilms und Bilden einer Heißsiegelverbindung dazwischen und (vi) gegebenenfalls Einfrieren des verpackten Fleischs oder Fischs. Das Verfahren ist für die eingangs genannte Anwendung geeignet; die in der EP 1 945 512 B1 näher beschriebenen Folien sind aber verbesserungswürdig in der Thermoformbarkeit, der Durchstoßfestigkeit, vor allem aber verbesserungswürdig in der Optik (Trübung, Clarity und Glanz),

In der WO 2018/004558 wird eine rezyklierbare Verpackung aus Polyester beschrieben - bestehend aus einer Menüschale aus thermoformbarer Folie und einer Deckelfolie. Die Anmeldung beinhaltet zwei Ausführungsformen: In Ausführungsform 1 [07] wird die Menüschale aus einer orientierten Polyethylenterephthalat-Folie und einem darauf durch Beschichtung aufgebrachten Heißsiegellack aus Polyestercopolymer gebildet. Die Deckelfolie ist eine einschichtige (=Mono)-folie - gebildet aus amorphem Polyethylenterephthalat oder orientiertem Polyethylenterephthalat oder kristallinem Polyethylenterephthalat oder recycliertem Polyethylenterephthalat. In Ausführungsform 2 [08] wird die Deckelfolie aus einer orientierten Polyethylenterephthalat-Folie und einem darauf durch Beschichtung aufgebrachten Heißsiegellack aus Polyestercopolymer gebildet. Die Menüschale ist eine Monofolie - gebildet aus amorphem Polyethylenterephthalat oder orientiertem Polyethylenterephthalat oder kristallinem Polyethylenterephthalat oder recycliertem Polyethylenterephthalat. In der Anmeldung werden Beispiele für kommerziell erhältliche Folien genannt, die für die Menüschale oder für die Deckelfolie verwendet werden können. Die Anmeldung enthält jedoch keine Angaben über Rezepturen oder Verfahren zur Herstellung der genannten Folien.

## Aufgabenstellung

Aufgabe der vorliegenden Erfindung war es, eine Verpackung aus Polyester für die eingangs genannte Anwendung zur Verfügung zu stellen, die sich durch eine gute Thermoformbarkeit (= Tiefziehfähigkeit) der Unterfolie und durch hervorragende Siegel- und Peeleigenschaften der Oberfolie zur Unterfolie auszeichnet. Darüber hinaus soll die Packung gute self-venting Eigenschaften aufweisen und eine gute Optik zeigen. Sie soll die Nachteile von Folien nach dem Stand der Technik nicht mehr aufweisen und sich insbesondere durch die folgenden Punkte/Eigenschaften auszeichnen:

- Die Unterfolie der Verpackung soll eine so gute Thermoformbarkeit aufweisen, dass hiermit am Markt übliche Fleisch-, Geflügel oder Fischstücke oder trockene Produkte, wie z.B. Sandwiches, problemlos im gewünschten Verpackungs-Design eingepackt werden können. Entsprechend den Marktanforderungen soll die Unterfolie mindestens bis zu einer Tiefe von 70 mm thermogeformt werden können (Format, siehe Figur 3).
- Daneben sollen beide Folien, insbesondere aber die Unterfolie, sehr gute mechanische Eigenschaften aufweisen. Die für die vorliegende Anwendung besonders wichtige mechanische Eigenschaft der Unterfolie ist die Durchstoßfestigkeit. Sie soll derart hoch sein, dass die Packung, ohne Schaden zu nehmen, transportiert und gelagert werden kann.
- Die Packung soll zwischen Unter- und Oberfolie derart versiegelt sein, dass sie u.a. ein Vorgaren im Wasserbad (Temperatur Wasserbad bis zu 85 °C, Verweilzeit Packung im Wasserbad bis zu 6 Stunden) übersteht, ohne dabei in den Siegelnähten aufzugehen
- Beim Garprozess, z.B. in einem konventionellen Backofen mit einer Backofentemperatur bis zu 220 °C, soll die Packung self-venting zeigen, wobei das self-venting idealer Weise nach einer Verweildauer von ca. 5 bis 15 min im Ofen auftreten soll
- Die Packung soll sich durch hervorragende Siegel- und Peeleigenschaften der Oberfolie zur Unterfolie auszeichnen. Es wird gewünscht, dass die Packung nach der Siegelung - auch durch kontaminierte Oberflächen, beispielsweise durch mit Fleischsaft (der zumindest auf den Siegelflächen weitgehend z.B. durch Abwischen entfernt wurde) kontaminiertem Menüschalenrand - fest verschlossen bleibt und z.B. nicht durch Erschütterung beim Transport, aufgeht. Die Siegelkraft soll dabei im Bereich von ungefähr 2 bis 10 N je 15 mm Streifenbreite der Folie liegt. Nach dem Garprozess soll die Oberfolie im noch heißen Zustand von der Unterfolie abgezogen - gepeelt - werden können, ohne dass dabei die Oberfolie einreißt noch weiterreißt.
- Die Packung soll sich durch eine brillante Optik auszeichnen. Dies betrifft die Trübung, insbesondere aber die Clarity von beiden Folien der Packung. Von beiden Folien wird gewünscht, dass ihre Trübung kleiner als 20 % und ihre Clarity größer als 70 % ist. Der Kunde wünscht beispielsweise, dass er sich beim Kauf der Ware ein klares und detailliertes Bild vom Packungsinhalt machen kann. Außerdem soll die Packung den Betrachter durch einen möglichst hohen Glanz optisch gut ansprechen.
- Weiterhin wird gefordert, dass die Packung den Garprozess derart übersteht, dass sie nicht weiß eintrübt, z.B. durch eine Kristallisation der Folien beim Garprozess,
- Daneben soll die Packung gute Barriereeigenschaften aufweisen, insbesondere gegen Sauerstoff und Wasserdampf. Als Vergleichsmaßstab dienen die Permeationswerte von üblichen, nach dem Stand der Technik hergestellten, biaxial orientierten PET-Folien (siehe z.B. http://www.bfr.bund.de/cm/343/barrierewirkung-ausgewaehlter - kunststoffmaterialien-gegen-die-migration-von-mineraloelfraktionen-in-lebensmittel.pdf), die nicht/bzw. nur marginal ( < 5 %) überschritten werden dürfen. Die Permeationswerte von 100 $\mu$m dicken PET-Folien (nicht tiefgezogen) betragen: OTR = 12 cm$^3$/(m$^2$ d bar) und die WVTR = 2 g/(m$^2$d).
- Die beiden transparenten Folien (Konzentration Antiblockmittel, siehe weiter hinten) der Packung sollen sich gut wickeln und gut verarbeiten lassen. Beim Auf- und Abwickeln der Folien dürfen die einzelnen Folienlagen nicht aneinander haften, auch nicht bei erhöhter Temperatur, z.B. 50 oder 60 °C. Eine erhöhte Haftung zwischen den einzelnen Folienlagen würde die Abwicklung der Folien erschweren oder gar unmöglich machen.
- Die Packung soll sich wirtschaftlich herstellen lassen. Dies bedeutet beispielsweise, dass zur Herstellung von Unter- und Oberfolie in der Industrie übliche Verfahren eingesetzt werden können.

**Lösung der Aufgabe**

Gelöst wird die Aufgabe durch die Bereitstellung einer transparenten Verpackung für die Vakuumverformung. Sie umfasst eine biaxial orientierte, thermoformbare Polyesterfolie als Unterfolie (A) und eine biaxial orientierte Polyesterfolie als Oberfolie (B), die zur Unterfolie (A) heißsiegelfähig und peelbar ist.

I Die Unterfolie (A) ist eine Folie, die zu mindestens 85 Gew.-% einen Copolyester umfasst, dessen Dicarbonsäure-Komponenten zu 85 bis 94 Mol-% auf Terephthalsäure abgeleitete Einheiten und zu 6 bis 15 Mol-% auf Isophthalsäure abgeleitete Einheiten zurückzuführen sind, wobei die Folie

   a) einen Flächen-E-Modul im Bereich von 4500 bis 6400 N/mm$^2$

   b) eine Summe der Festigkeiten ($\sigma_5$-Wert) in Längsrichtung und in Querrichtung im Bereich von 170 bis 220 MPa

   c) eine Durchstoßfestigkeit F[N] > 0,35 · $d$[$\mu m$], d = Dicke der Folie

   d) eine Dichte von kleiner 1395 kg/m$^3$

e) eine Trübung von weniger als 2,0 % und eine Clarity von mindestens 85 % und

f) eine Dicke im Bereich von 50 bis 300 $\mu$m, aufweist.

II Die Oberfolie (B) ist eine Folie, die eine Basisschicht (B") und eine gegenüber der Unterfolie (A) heißsiegelfähige und peelbare Deckschicht (B') aufweist, wobei die heißsiegelfähige und peelbare Deckschicht (B')

a) zu mindestens 60 Gew.-%, aus einem Polyester aufgebaut ist, der aus 25 bis 95 Mol-% an Einheiten aufgebaut ist, die auf mindestens eine aromatische Dicarbonsäure und 5 bis 75 Mol-% an Einheiten, die auf mindestens eine aliphatische Dicarbonsäure zurückgehen, wobei die Summe der dicarbonsäureabgeleiteten Molprozente 100 ergibt; und

b) bis zu 10 Gew.-% anorganische und/oder organische Partikel mit einem mittleren Durchmesser $d_{50}$ von 1,5 bis 5,0 $\mu$m enthält, wobei das Verhältnis aus Teilchengröße $d_{50}$ und Schichtdicke der Deckschicht (B') größer 1,0 ist; und

c) die Schichtdicke der Deckschicht (B') 1,5 bis 5,0 $\mu$m beträgt;

und wobei die Oberfolie (B)

- eine Trübung von weniger als 20 % und eine Clarity von mindestens 70 % besitzt,

- eine Siegelnahtfestigkeit zu sich selbst (= Finsiegelung) und zur Unterfolie (A) aufweist, die im Bereich von 2 bis 10 N/15 mm liegt und

- eine Dicke im Bereich von 20 bis 125 $\mu$m, aufweist.

Im Vorstehenden wie im Folgenden bezieht sich Gew.-%, sofern nichts anderes erwähnt, immer auf die Masse der jeweiligen Schicht oder das jeweilige System, in dessen Zusammenhang die Angabe genannt ist.

Des Weiteren werden im Vorstehenden wie im Folgenden die Begriffe "Packung" und "Verpackung" synonym verwendet, und bezeichnen eine Kombination (ein Kit) aus Unterfolie (A) und Oberfolie (B). Diese beiden Folien können einem Anwender zur Verfügung gestellt werden, der mit deren Hilfe durch Versiegelung beispielsweise Lebensmittel verpacken kann.

## (I) **Unterfolie (A) = Thermoformbare Polyesterfolie**

Die Packung nach der vorliegenden Erfindung enthält eine thermoformbare Unterfolie (A), die durch eine transparente, biaxial orientierte, einschichtige Polyesterfolie (A) oder durch eine transparente, biaxial orientierte, mehrschichtige koextrudierte Polyesterfolie, z.B. (A'A"A''') gebildet wird.

### *Copolyester*

Die Unterfolie (A) umfasst zu mindestens 85 Gew.-% einen thermoplastischen Copolyester. Erfindungsgemäß handelt es sich dabei um einen Copolyester, dessen Dicarbonsäure-Komponenten zu 85 bis 94 Mol-% auf Terephthalsäure abgeleitete Einheiten und zu 6 bis 15 Mol-% auf Isophthalsäure abgeleitete Einheiten zurückzuführen sind. Bevorzugt handelt es sich dabei um eine Folie, die aus einem Copolyester aufgebaut ist, dessen Dicarbonsäure-Komponenten zu 86 bis 93 Mol-% auf Terephthalsäure abgeleitete Einheiten und zu 7 bis 14 Mol-% auf Isophthalsäure abgeleitete Einheiten zurückzuführen sind. Als Diol im thermoplastischen Copolyester ist erfindungsgemäß bevorzugt Ethylenglykol geeignet.

0 bis 15 Gew.-% der Unterfolie (A) können aus weiteren Polymeren/Polymeranteile und/oder weiteren Substanzen aufgebaut sein, wobei die weiteren Polymere/Polymeranteile aus anderen aromatischen und/oder aliphatischen Dicarbonsäuren bzw. Diolen stammen. In vorteilhafter Weise können für den thermoplastischen Polyester der Unterfolie (A) auch Mischungen oder Blends aus den genannten Homo- und/oder Copolymeren verwendet werden.

Geeignete andere aromatische Dicarbonsäuren sind bevorzugt Terephthalsäure, 2,5-Furandicarbonsäure (FDCA), Biphenyl-4,4'-dicarbonsäure, Naphthalindicarbonsäuren (beispielsweise Naphthalin-1,4- oder 1,6-dicarbonsäure oder Naphthalin-2,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$ Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht.

Durch die Wahl der erfindungsgemäßen Anteile, die auf Terephthalsäure und Isophthalsäure abgeleitete Einheiten zurückzuführen sind, werden die gewünschten guten mechanischen Eigenschaften, insbesondere aber die gewünschte gute Thermoformbarkeit der biaxial orientierten Polyesterfolie erhalten. Beträgt der Anteil der Dicarbonsäure-Komponenten, die auf von Isophthalsäure abgeleitete Einheiten zurückzuführen sind, weniger als 6 Gew.-%, so kann die gewünschte gute Thermoformbarkeit der Folie nicht erhalten werden. Beträgt andererseits dieser Anteil mehr 15 Gew.-%, so ist eine verfahrenssichere Herstellung der Unterfolie (A) nach dem nachstehend beschriebenen Verfahren nicht mehr gegeben. Folien, die aus solch hohen Anteilen an Komponenten, die auf Isophthalsäure abgeleitete Einheiten zurückzuführen sind, bestehen, neigen im Herstellungsprozess z.B. sehr stark zum Verkleben mit sich selbst oder mit entsprechenden Maschinenteilen, z.B. Walzen in der Längsstreckung oder Walzen im Auslauf der Maschine nach der Querstreckung.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden in Gegenwart allgemein üblicher Polykondensationskatalysatoren, wie Antimontrioxid, Titanoxid, sowie Germanium-Verbindungen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders vorteilhaft hat es sich erwiesen, wenn die Zwischenprodukte in Gegenwart von Titandioxid oder Germanium-Verbindungen polykondensiert werden, beziehungsweise, die Direktveresterungsverfahren in Gegenwart von Polykondensationskatalysatoren wie Titandioxid oder Germanium-Verbindungen durchgeführt werden. Die biaxial orientierte Polyesterfolie ist dann antimonfrei. Angestrebt wird im besonders bevorzugten Fall eine biaxial orientierte Polyesterfolie, die kein Antimon enthält und somit in Verpackungsanwendungen, bei denen die Folie in direktem Lebensmittelkontakt steht, eingesetzt werden kann.

### *Weitere Parameter der Lösung*

Die Folie gemäß der vorliegenden Erfindung ist charakterisiert durch einen Flächen-E-Modul im Bereich von 4500 bis 6400 N/mm2, gemäß untenstehender Formel

$$E_{Fläche} = \sqrt{(E_{MD}{}^2 + E_{TD}{}^2)}.$$

$E_{MD}$ ist der E-Modul der Folie, gemessen in Längsrichtung der Maschine und $E_{TD}$ ist der E-Modul der Folie, gemessen in Querrichtung der Maschine. Diese Eigenschaft wird im Wesentlichen durch Einhaltung des unten beschriebenen erfindungsgemäßen Herstellprozesses in Verbindung mit den oben beschriebenen erfindungsgemäßen Polyestern erreicht. Es wurde überraschender Weise gefunden, das für den Fall, dass der Flächenmodul kleiner ist als 4500 N/mm$^2$, die Folie nicht mehr die gewünschten mechanischen Eigenschaften aufweist und daher für die genannte Anwendung ungeeignet ist. Beispielsweise kann dann die Folie aufgrund des zu geringen Flächen-E-Modul nicht mehr vernünftig gewickelt werden; es entstehen Falten, die unerwünscht sind. Weiterhin wurde im Rahmen der vorliegenden Erfindung gefunden, dass auf der anderen Seite für den Fall, wo der Flächenmodul größer ist als 6400 N/mm$^2$, die Folie nicht mehr entsprechend der Aufgabenstellung tiefgezogen werden kann.

Weiterhin ist die Folie gemäß der vorliegenden Erfindung durch die Summe der Festigkeiten ($\sigma_5$-Wert) in Längsrichtung (MD) und in Querrichtung (TD) im Bereich von 170 bis 220 MPa gekennzeichnet. Diese Eigenschaft wird im Wesentlichen wiederum durch Einhaltung des unten beschriebenen erfindungsgemäßen Herstellprozesses in Verbindung mit den oben beschriebenen erfindungsgemäßen Polyestern erreicht. Ist die Summe der Festigkeiten kleiner als 170 MPa, so hat die Folie nicht mehr die gewünschten mechanischen Eigenschaften und ist daher für die Anwendung ungeeignet ist. Beispielsweise kann dann die Folie aufgrund der zu geringen Summe der Festigkeiten nicht mehr vernünftig in der Thermoformmaschine transportiert werden; die Folie verzieht sich, was unerwünscht ist. Im anderen Fall, wo die Summe der Festigkeiten größer als 220 MPa ist, kann die Folie nicht mehr entsprechend der Aufgabenstellung tiefgezogen werden.

Weiterhin ist die Folie gemäß der vorliegenden Erfindung durch eine Dichte von kleiner 1395 kg/m$^3$ charakterisiert. Diese Eigenschaft wird im Wesentlichen wiederum durch Einhaltung des unten beschriebenen erfindungsgemäßen Herstellprozesses in Verbindung mit den oben beschriebenen erfindungsgemäßen Polyestern erreicht. Ist die Dichte der Folie größer als 1395 kg/m$^3$, so ist die Folie überraschender Weise zu kristallin, um entsprechend der Aufgabenstellung tiefgezogen werden zu können.

### SV-Wert der Unterfolie (A)

Zur Erzielung der gewünschten guten mechanischen Eigenschaften, insbesondere aber zur Erzielung der gewünschten guten Thermoformbarkeit ist es erforderlich, dass der SV-Wert der Unterfolie (A) in einem bestimmten Bereich liegt. Erfindungsgemäß liegt der SV-Wert der Unterfolie (A) im Bereich von 680 bis 1000, bevorzugt im Bereich von 710 bis 950, insbesondere bevorzugt im Bereich von 740 bis 900. Dabei gilt, dass sich die SV-Werte der jeweiligen Polymerschmelzen (Basis- und Deckschichten) um nicht mehr als 100, vorzugsweise nicht mehr als 75, insbesondere aber nicht mehr als 50 Einheiten unterscheiden sollten.

Ist der SV-Wert der Folie kleiner als 680, so kann die geforderte gute Thermoformbarkeit der Folie von ca. 70 mm Tiefzug (Format, siehe Figur 3) nicht erreicht werden. Ist andererseits der SV-Wert größer als 1000, so ist der Polyester zu viskos und kann z.B. nicht mehr wirtschaftlich extrudiert werden.

### Antiblockmittel in Unterfolie (A)

Um das Verarbeitungsverhalten der Folie zu verbessern, ist es von Vorteil, in die Unterfolie (A) Partikel einzuarbeiten. Dabei hat es sich als günstig erwiesen, die folgenden Bedingungen einzuhalten

a) Die Partikel sollen einen mittleren Partikeldurchmesser $d_{50}$ von 1,5 bis 5,0 $\mu$m aufweisen. Als besonders zweckmäßig hat es sich erwiesen, Teilchen mit einem $d_{50}$ von 1,7 bis 4,5 $\mu$m und besonders bevorzugt von 2,0 bis 4,0 $\mu$m zu verwenden.

b) Die Partikel sollen in der Unterfolie in einer Konzentration von 0 bis 0,1 Gew.-% (1000 ppm) vorhanden sein. Bevorzugt beträgt die Konzentration der Partikel in der Folie $1,0 \times 10^{-5}$ bis 0,075 Gew.-% und besonders bevorzugt $1,1 \times 10^{-5}$ bis 0,05 Gew.-%.

Bei der Verwendung von Teilchen mit einem Durchmesser $d_{50}$, der unterhalb von 1,5 $\mu$m liegt, ist ein positiver Einfluss der Partikel z.B. auf die Wicklung der Folie nicht gegeben. In diesem Fall neigt die Folie z.B. beim Abwickeln zum Ein- oder Weiterreißen, was unerwünscht ist. Teilchen mit einem Durchmesser $d_{50}$ von größer als 5,0 $\mu$m verursachen in der Regel Probleme bei der Verstreckung der Folie, es bilden sich zunehmend Vakuolen, die die Trübung der Folie negativ beeinflussen.

Enthält die Unterfolie (A) Partikel in einer Konzentration von mehr als 0,1 Gew.-%, so liegt die Trübung der Folie nicht mehr im erfindungsgemäßen Bereich.

Übliche Antiblockmittel sind anorganische und/oder organische Partikel, wie beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Calcium-, Barium-, Zink- oder Mangan-Salze der in der Unterfolie (A) eingesetzten abgeleiteten Dicarbonsäuren, Titandioxid, Kaolin oder vernetzte Polystyrol- oder vernetzte Polymer-Partikel auf Basis von Acrylsäurederivaten.

Die Partikel können der Unterfolie (A) in den jeweils vorteilhaften Konzentrationen, z.B. als glykolische Dispersion während der Herstellung des Polyesters, d.h. während seiner Polykondensation oder bei der Extrusion der Folie als Masterbatch zugesetzt werden.

Erfindungsgemäß bevorzugte Partikel sind synthetisch hergestellte, amorphe SiO$_2$-Partikel in kolloidaler Form. Die Partikel werden hervorragend in die Polymermatrix eingebunden und erzeugen nur wenige Vakuolen. Vakuolen können z.B. bei der biaxialen Orientierung der Folie entstehen; sie bewirken im Allgemeinen eine Erhöhung der Trübung und sind daher für die vorliegende Erfindung möglichst zu vermeiden. Zur Herstellung der SiO$_2$-Partikel wird auf den Stand der Technik verwiesen; das Herstellungsverfahren ist z.B. in der EP 1 475 228 B1 ausführlich offenbart.

### Radikalfänger in der Folie

Beim sogenannten Cook-!n-Verfahren (siehe hierzu die EP 1 697 129 oder die EP 2810776 A1) wird die Packung verschlossen in den Backofen gelegt und nach einer bestimmten Garzeit aus dem Ofen geholt. Die Garzeit richtet sich im Wesentlichen nach der Packungsgröße (Masse des Inhalts) und liegt in der Regel zwischen 30 min und zwei (2) Stunden.

Prozessbedingt wird dabei die thermoformbare Folie über einen Großteil ihrer Fläche wenig thermisch belastet. Nur im Randbereich der Packung und hier insbesondere an den Ecken der Packung (Siegelrand) findet eine deutlich erhöhte thermische Belastung der Folie statt. Während der übrige Teil der thermogeformten Folie durch das verdunstende Wasser Temperaturen deutlich unterhalb von 160 °C erfährt, wird der Eckenbereich der Packung der Ofentemperatur für die gesamte Garzeit ausgesetzt.

Im Extremfall wird dabei die Folie im Eckebereich über mehr als 2 h bei einer Temperatur von 220 °C thermisch belastet, wobei bei dieser erhöhten Temperatur Sauerstoff in das Polymere eindringen kann.

Als Folge hiervon kann es vorkommen, dass die Packung und damit die Folie insbesondere in den Ecken anfängt, spröde zu werden und zur Splitterbildung neigt. Dies ist äußerst unerwünscht und muss vermieden werden.

Wird für diesen Anwendungsbereich eine erhöhte Thermostabilität gefordert, enthält die Folie - aus vorzugsweise antimonfreien Polyester - bevorzugt einen oder mehrere Radikalfänger. Dieser/Diese Radikalfänger basiert(en) bevorzugt aus phenolischen Antioxidantien.

Es wurde überraschend gefunden, dass die Folie, die einen oder mehrere Radikalfänger enthält, eine deutlich erhöhte Temperaturresistenz aufweist, so dass aus ihnen hergestellte Verpackungen mehr als eine Stunde in einem Ofen bei Temperaturen von oberhalb 220 °C verbleiben können, ohne dabei zu verspröden.

In einer bevorzugten Ausführungsform enthält die Folie nach der vorliegenden Erfindung 500 - 3000 ppm eines Radikalfängers, wobei der Gehalt bevorzugt zwischen 600 - 2500 ppm und insbesondere bevorzugt zwischen 700 - 2000 ppm liegt. Niedrigere Gehalte als 500 ppm führen tendenziell zu einem Versagen im Ofen (= Splitterbildung) und höhere Gehalte als 3000 ppm haben keine weitere verbessernde Wirkung auf die Folie und verringern daher nur die Wirtschaftlichkeit und können zu einer Migration des Stabilisators aus der Folie in ein verpacktes Lebensmittel führen. Gehalte oberhalb von 3000 ppm führen zudem tendenziell zur Bildung von Gelen und einem nicht gewünschten Gelbstich der Folie.

Als Radikalfänger kann sowohl eine Verbindung (bevorzugt) als auch eine Mischung aus verschiedenen Radikalfängern eingesetzt werden. Der/die verwendete(n) Radikalfänger werden bevorzugt aus der Gruppe der phenolischen Antioxidantien ausgewählt.

Bevorzugte Radikalfänger sind pentaerythritol tetrakis [3-(3,5-di-tert-butyl-4-hydroxyphenyl)-propionate] (CAS-Nr. 6683-19-8) und 1,3,5-Trimethyl-2,4,6-tris(3,5-di-tert-butyl-4-hydroxybenzyl)-benzol) (CAS-Nr. 1709-70-2), erhältlich unter dem Handelsnahmen Irganox 1010 und Irganox 1330 der Firma BASF.

Die Wirksamkeit des Radikalfängers kann direkt an der Verpackung, z.B. nach Entnahme der Verpackung aus dem Ofen getestet werden. Die Verpackung wird dabei als gut (d.h. für die Anwendung geeignet) bezeichnet, wenn an keiner Stelle der Folie nach der vorliegenden Erfindung ein Absplittern festgestellt wird.

### Aufbau der Unterfolie (A)

Die Unterfolie (A) kann einschichtig oder mehrschichtig (d.h. zu mindestens zweischichtig) aufgebaut sein. Zur Erzielung der vorgenannten Eigenschaften, insbesondere der geforderten guten optischen Eigenschaften der Polyesterfolie, hat sich ein einschichtiger Aufbau der Folie als besonders vorteilhaft herausgestellt. Aber auch ein zwei- oder dreischichtiger Aufbau der Unterfolie (A) aus zwei Schichten A' und A" oder drei Schichten A'A"A' oder A'A"A‴ hat sich als geeignet erwiesen. Die Menge an Partikeln in der Basisschicht A" einer z.B. dreischichtigen Folie sollte dabei niedriger eingestellt werden als in den beiden Schichten A' (und A‴), die vorzugsweise vom Aufbau gleichgehalten werden oder aber auch verschieden sein können.

Die Partikelkonzentration in der Schicht (A") sollte dabei so gewählt werden, dass sie sich positiv auf die Trübung und den Glanz der Folie auswirkt. Bei einer dreischichtigen Folie vom genannten Typ wird in der Schicht (A") die Partikelkonzentration zwischen 0 und 0,08 Gew.-%, vorzugsweise zwischen 0 und 0,05 Gew.-% und insbesondere zwischen 0 und 0,02 Gew.-% liegen. Der Partikeldurchmesser der eingesetzten Teilchen ist mit einem $d_{50}$ von größer 1,5 μm besonders bevorzugt.

Bei der Wahl der Partikelkonzentration in den Deckschichten (A' oder A‴) und in der Basisschicht (A") ist darauf zu achten, dass die Partikelkonzentration in der gesamten Folie den erfindungsgemäßen Wert von 0,1 Gew.-% nicht überschreitet.

Die Dicke der beiden Schichten A' (oder A' und A‴) kann gleich oder verschieden sein. Ihre Dicken liegen im Allgemeinen zwischen 0,2 und 5 μm. Die Unterfolie (A) kann darüber hinaus zusätzlich übliche Additive, wie Stabilisatoren (UV, Hydrolyse) oder weitere Füller (z.B. Farbpigmente) in den vom Hersteller empfohlenen Konzentrationen enthalten. Sie werden zweckmäßig dem Polymer, bzw. der Polymermischung, bereits vor dem Aufschmelzen im Extruder zugesetzt.

### Dicke der Unterfolie (A)

Die Gesamtdicke der erfindungsgemäßen Polyesterfolie (A) kann innerhalb bestimmter Grenzen variieren. Sie beträgt 50 bis 300 μm, bevorzugt 51 bis 200 μm und besonders bevorzugt 52 bis 200 μm. Ist die Dicke der Folie (A)

geringer als 50 $\mu$m, so sind die Mechanik und die Barriereeigenschaften der thermogeformten Folie nicht ausreichend, Ist die Dicke der Folie (A) dagegen größer als 300 $\mu$m, so verschlechtert sich die Thermoformbarkeit der Folie und außerdem wird die Herstellung der Folie unwirtschaftlich, was beides unerwünscht ist.

### Verfahren zur Herstellung der Unterfolie (A)

Gegenstand der vorliegenden Erfindung ist ebenfalls ein Verfahren zur Herstellung der thermoformbaren Unterfolie (A). Es umfasst die Herstellung der Unterfolie durch Extrusion (Herstellung von Schicht (A)) oder Koextrusion (z.B. Herstellung der Schichten (A'A"A''')), das biaxiale Strecken der Unterfolie (A), sowie das Thermofixieren und das Aufwickeln der gestreckten Unterfolie (A).

Bei dem Koextrusions-Verfahren werden nach der Extrusion der jeweiligen Schmelzen in getrennten Extrudern diese in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt. Für die Durchmischung der verschiedenen Komponenten hat es sich dabei als vorteilhaft erwiesen, wenn die Extrusion der Polymere für die Schicht (A) oder Schichten (A'A"A''') mit einem Zweischneckenextruder mit Entgasungsmöglichkeit(en) durchgeführt wird. Es wird hierdurch eine Folie hergestellt, die optisch einwandfrei ist, z.B. keine Wolkenstruktur oder keine Streifen aufweist.

Die biaxiale Streckung der Folie wird sequentiell durchgeführt. Bei der sequenziellen Streckung wird vorzugsweise erst in Längsrichtung und anschließend in Querrichtung gestreckt. Das Strecken in Längsrichtung lässt sich z.B. mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperaturen, bei der die biaxiale Streckung durchgeführt wird, können in gewissen Bereichen variieren, sie richten sich im Wesentlichen nach den gewünschten Eigenschaften, insbesondere den gewünschten Thermoformeigenschaften der erfindungsgemäßen Folie. Überraschender Weise wurde dabei gefunden, dass zur Erzielung der gewünschten Thermoformbarkeit die Folie deutlich geringer versreckt werden sollte, als es nach dem Stand der Technik üblich ist.

Zur Erzielung der gewünschten Thermoformbarkeit der Unterfolie (A) wird die Streckung in Längsrichtung unter bestimmten Bedingungen durchgeführt. Die Temperatur der Folie liegt bei der Streckung in einem Bereich von 70 bis 100 °C (die Aufheiztemperaturen der Walzen betragen 60 bis 110 °C). Das Längsstreckverhältnis wird im Bereich von 2,0:1 bis 4,0:1, bevorzugt im Bereich von 2,1:1 bis 3,8:1 und besonders bevorzugt im Bereich von 2,2:1 bis 3,6:1 durchgeführt. Wird die Folie unterhalb von 2,0:1 verstreckt, so ist z.B. das Dickenprofil schlecht, wird die Folie oberhalb von 4,0:1 verstreckt, so ist die Thermoformbarkeit nicht mehr ausreichend.

Nach der der Längsstreckung erfolgt die Querstreckung in einem entsprechenden Kluppenrahmen. Die Temperaturen der Aufheizfelder im Kluppenrahmen betragen 70 bis 120 °C (Film Temperatur: 60 bis 110 °C) Die Streckung in Querrichtung wird in einem Temperaturbereich der Folie von 90 °C (Beginn der Streckung) bis 140 °C (Ende der Streckung) durchgeführt. Das Querstreckverhältnis liegt erfindungsgemäß im Bereich von 2,2:1 bis 3,8:1, bevorzugt von 2,4:1 bis 3,7:1 und besonders bevorzugt im Bereich von 2,6:1 bis 3,6:1. Wird die Folie unterhalb von 2,2:1 verstreckt, so ist z.B. das Dickenprofil schlecht, wird die Folie oberhalb von 3,8:1 verstreckt, so ist die Thermoformbarkeit nicht mehr ausreichend.

Nach der biaxialen Orientierung erfolgt die Thermofixierung der Folie. Überraschender Weise wurde gefunden, dass zur Erzielung der vorgenannten, gewünschten guten Thermoformbarkeit der Folie die Thermofixierung unter bestimmten, erfindungsgemäßen Bedingungen durchgeführt werden muss. Die Zeitdauer für die Thermofixierung beträgt erfindungsgemäß 5 bis 25 s, bevorzugt 6 bis 22 s und besonders bevorzugt 7 bis 20 s. Die Temperatur, bei der die Thermofixierung durchgeführt wird, liegt erfindungsgemäß im Bereich von 175 bis 220 °C, bevorzugt im Bereich von 178 bis 215 °C und besonders bevorzugt im Bereich von 180 bis 210 °C.

Nach der Thermofixierung wird die Folie abgekühlt und in üblicher Weise aufgewickelt.

Für die Herstellung der erfindungsgemäßen Unterfolie (A) ist es wichtig, dass die oben genannten Verfahrensbedingungen eingehalten werden. Werden die genannten erfindungsgemäßen Verfahrensbedingungen bei der Längs- und Querstreckung, sowie bei der Fixierung der Unterfolie (A) nicht eingehalten, so können die erfindungsgemäßen Eigenschaften der Folie hinsichtlich Mechanik der Folie, insbesondere aber hinsichtlich der gewünschten Thermoformbarkeit und Durchstoßfestigkeit nicht realisiert werden, was unerwünscht ist.

### Beschichtung (C) der Unterfolie (A)

Zur Verbesserung der Wickelbarkeit der transparenten, niedrig gefüllten Folie wird in einer bevorzugten Ausführungsform zumindest eine Oberfläche der Unterfolie (A) inline oder offline mit einer weiteren Schicht (C) beschichtet, die Poly(acryl-), und/oder Poly(methacrylsäurealkylester) und/oder Poly(acryl-co-methacrylsäurealkylester) enthält. Weiterhin können acrylische und/oder methacrylische Copolyester enthalten sein, die eine Vernetzung der Polymere bewirken. Dabei wird bevorzugt N-Methylolacrylamid zur Herstellung der Copolymere eingesetzt. Weiterhin können auch andere Vernetzer wie z.B. Melamin eingesetzt werden. Bevorzugt wird die Beschichtung inline aufgetragen.

Die Beschichtung (C) gemäß der vorliegenden Erfindung ist ausführlich in der EPA 0 144 948 beschrieben, auf die an dieser Stelle ausdrücklich Bezug genommen wird.

Die bevorzugte Acrylat-Beschichtung wird zumindest einseitig auf die Unterfolie (A) aufgebracht und dient im Wesentlichen zur Verbesserung der Wickelung, insbesondere zur Verbesserung der Abwickelung der Folie nach Lagerung (bei erhöhten Temperaturen). Die Beschichtungsrezeptur kann bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales $SiO_2$ usw. Normalerweise ist es angebracht, ein Tensid einzuarbeiten, um die Fähigkeit der wässrigen Beschichtung zur Benetzung der Trägerfolie aus Polyester weiter zu erhöhen und um die Partikel aus Copolymeren aus Acryl-/methacrylsäure zu stabilisieren.

### Aufgebringen der Schicht (C)

Die Beschichtung der Unterfolie (A) mit der acrylisch vernetzenden Schicht (C) erfolgt entweder inline vorzugsweise zwischen dem ersten und dem zweiten Streckschritt oder offline nach der Herstellung der biaxial orientierten Folie.

Bei der vorzugsweise angewendeten inline Beschichtung wird eine oder beide Oberflächen der Unterfolie (A) vor der Querstreckung mit einer Schicht (C) beschichtet. Bei der offline Beschichtung erfolgt die Aufbringung der Schicht (C) vorzugsweise nach der Herstellung der Unterfolie (A).

Die Polyesterfolie wird mit einer funktionalen Beschichtung derart beschichtet, dass die Beschichtung auf der fertigen Polyesterfolie eine Dicke von bevorzugt 5 bis 100 nm, besonders bevorzugt 10 bis 90 und ganz besonders bevorzugt 15 bis 80 nm aufweist. Besonders bevorzugt ist die Aufbringung der Schicht (C) mittels des "Reverse gravureroll coating" Verfahrens, bei dem sich die Beschichtung äußerst homogen in Schichtdicken bis zu 200 nm auftragen lassen. Die Beschichtung wird bevorzugt als Lösung, Suspension oder als Dispersion aufgetragen, besonders bevorzugt als wässrige Lösung, Suspension oder der Dispersion.

Die genannten Stoffe werden als verdünnte, wässrige Lösung oder Dispersion auf eine oder beiden Folienoberflächen aufgebracht und anschließend wird das Lösungsmittel verflüchtigt. Wird die Beschichtung Inline vor der Querstreckung aufgebracht, reicht die Temperaturbehandlung in der Querstreckung und der anschließenden Hitzefixierung aus, um das Lösungsmittel zu verflüchtigen und die Beschichtung zu trocknen.

### Erfindungsgemäße Eigenschaften der Unterfolie (A)

Die erfindungsgemäße Unterfolie (A), hergestellt nach oben beschriebenem erfindungsgemäßen Verfahren, besitzt eine Reihe von Eigenschaften, von denen untenstehend die wichtigsten aufgeführt sind.

Die erfindungsgemäße Unterfolie (A) zeichnet sich für die vorgesehene Anwendung durch sehr gute mechanische Eigenschaften aus (Flächen-E-Modul, Summe der Festigkeiten, Durchstoßfestigkeit), die es u.a. ermöglichen, dass die gewünschte gute Thermoformbarkeit und die gewünschte gute Durchstoßfestigkeit erreicht werden.

Die Unterfolie (A) zeichnet sich durch brillante optische Eigenschaften aus. Die Trübung der Unterfolie (A) ist kleiner als 2 %, die Clarity ist größer als 85 % und der Glanz beträgt mehr als 140.

Die für die Anwendung wichtige Durchstoßfestigkeit F[N] der Folie ist überraschender Weise derart hoch, dass die daraus hergestellte tiefgezogene Packung, ohne Schaden zu nehmen, transportiert und gelagert werden kann. Erfindungsgemäß weist die Unterfolie (A) im Definitionsbereich für die Dicke eine Durchstoßfestigkeit F auf, die mit der Dicke d der Folie gemäß folgender Formel korreliert

$$\frac{F[N]}{d[\mu m]} > 0,35$$

Die Unterfolie (A) weist eine Thermoformbarkeit auf, die mindestens 70 mm beträgt (Format, siehe Figur 3), bei einem Thermoformverhältnis von mindestens 2,5. Mit Schalen, die eine derartige, erfindungsgemäße Thermoformbarkeit aufweisen, können die am Markt üblichen Portionen an Fleisch-, Geflügel oder Fisch problemlos im üblichen Verpackungsdesign eingepackt werden.

Die Unterfolie (A) weist die geforderten guten Barriereeigenschaften auf, insbesondere gegen Sauerstoff, Wasserdampf und verschiedenen Aromen.

Die hochtransparente Unterfolie (A) lässt sich gut wickeln und gut verarbeiten. Beim Wickeln der Folien haften die einzelnen Folienlagen nicht aneinander, auch nicht bei erhöhter Temperatur, wie 50 oder 60 °C.

Die Folie lässt sich darüber hinaus wirtschaftlich herstellen. Dies bedeutet beispielsweise, dass zur Herstellung der Unterfolie in der Industrie übliche Verfahren eingesetzt werden können.

Die erfindungsgemäße thermoformfähige Polyesterfolie eignet sich hervorragend zum Verpacken von Nahrungs- und Genussmitteln. Sie ist insbesondere zur Verpackung von Nahrungs- und Genussmitteln in thermogeformten Menüschalen geeignet, die nach dem vorstehenden Verfahren hergestellt wurden.

Die Tabelle 1 fasst u.a. die wichtigsten erfindungsgemäßen Folieneigenschaften zusammen.

## Tabelle 1

| Unterfolie (A) | | Erfindungsgemäßer Bereich | Bevorzugt | Besonders bevorzugt | Einheit | Messmethode |
|---|---|---|---|---|---|---|
| Anteil Copolyester in Unterfolie (A) | | $\geq 85$ | $\geq 86$ | $\geq 87$ | Gew.--% | |
| Anteil Einheiten im Copolyester, aufgebaut auf Isophthalateinheiten | | 6 bis 15 | 7 bis 14 | 8 bis 13 | Mol.-% | |
| Füllstoffkonzentration | | 0 bis 0,1 | $1,0 \times 10^{-5}$ bis 0,075 | $1,1 \times 10^{-5}$ bis 0,05 | Gew.--% | |
| Partikeldurchmesser $d_{50}$ | | 1,5 bis 5 | 1,7 bis 4,5 | 2,0 bis 4,0 | µm | |

Verfahrenstechnik

| | | | | | | |
|---|---|---|---|---|---|---|
| Längsstreckung (T-Prozess) | Aufheiztemperatur der Walzen | 60 bis 110 | 65 bis 105 | | °C | |
| | Strecktemperatur der Folie | 70 bis 100 | 75 bis 100 | | °C | |
| | Längsstreckverhältnis | 2,0 bis 4,0 | 2,1 bis 3,8 | 2,2 bis 3,6 | | |
| Querstreckung | Temperatur Aufheizfelder | 70 bis 120 | | | °C | |
| | Aufheiztemperatur der Folie | 60 bis 110 | | | °C | |
| | Strecktemperatur | 90 bis 140 | | | °C | |
| | Querstreckverhältnis | 2,2 bis 3,8 | 2,4 bis 3,7 | 2,6 bis 3,6 | | |
| Fixierung | Temperatur | 175 bis 220 | 178 bis 215 | 180 bis 210 | °C | |
| | Dauer | 5 bis 25 | 6 bis 22 | 7 bis 20 | sec | |

Eigenschaften der Folie

| | | | | | | |
|---|---|---|---|---|---|---|
| Flächen E-Modul | | 4500 bis 6400 | 4600 bis 6300 | 4700 bis 6300 | N/mm$^2$ | ISO527-1 und ISO 527-3; Mustertyp 2 |
| Summe der σ5-Werte | | 170 bis 220 | 175 bis 210 | 180 bis 220 | N/mm$^2$ | ISO527-1 und ISO 527-3; Mustertyp 2 |
| Dichte | | < 1395 | < 1392 | < 1390 | kg/m$^3$ | ASTM D 1505-68, Methode C |
| Trübung der Folie | | < 2,0 | | | | ASTM D 1003-61, Methode A |
| Clarity der Folie | | $\geq 85$ | | | | ASTM D 1003 |
| Glanz der Folie | | $\geq 140$ | | | N/15 mm | DIN 67530 |
| Transparenz der Folie | | $\geq 89$ | | | | DIN 1033-77 |
| SV-Wert der Folie | | 680 bis 1000 | 710 bis 950 | 740 bis 900 | | |
| Durchstoßfestigkeit/Dicke der Folie | | 0,35 d | | | N/µm | EN 14477 |
| Tiefziehfähigkeit (Format nach Figur 3) | Tiefe | $\geq 70$ | $\geq 73$ | $\geq 76$ | mm | |
| | Agesamt/AFolie | $\geq 2,5$ | $\geq 2,6$ | $\geq 2,7$ | | |
| Dicke der Folie | | 50 bis 300 | 51 bis 200 | 52 bis 200 | µm | |

## (II) Oberfolie (B) = Siegelfähige Polyesterfolie

Die Packung nach der vorliegenden Erfindung enthält des Weiteren eine Oberfolie (B), die durch eine transparente, biaxial orientierte und koextrudierte, heißsiegelbare und peelfähige Polyesterfolie (B' B"; Erläuterung s. unten) oder (B' B" B‴; Erläuterung s. unten) gebildet wird. Die Deckschicht (B') ist überwiegend, d.h. zu mindestens 60 Gew.-%, aus Polyestern aufgebaut.

### Deckschicht (B')

### Polymere für die amorphe Deckschicht (B')

Erfindungsgemäß umfasst die heißsiegelbare Deckschicht (B') mindestens einen Polyester und optional ein Antiblockmittel. Der Polyester ist aufgebaut aus Einheiten, die von aromatischen und aliphatischen Dicarbonsäuren abgeleitet sind. Die auf die aromatischen Dicarbonsäuren zurückgehenden Einheiten sind in dem Polyester in einer Menge von 25 bis 95 Mol-%, bevorzugt 40 bis 90 Mol-%, besonders bevorzugt 50 bis 88 Mol-% enthalten. Die auf die aliphatischen Dicarbonsäuren zurückgehenden Einheiten sind in dem Polyester in einer Menge von 5 bis 75 Mol-%, bevorzugt 10 bis 60 Mol-%, besonders bevorzugt 12 bis 50 Mol-% enthalten, wobei die Mol-%-Angaben sich immer zu 100 % ergänzen. Die hierzu korrespondierenden Dioleinheiten ergeben ebenfalls immer 100 Mol-%.

Beispiele für die erfindungsgemäß einsetzbaren aromatischen Dicarbonsäuren sind die Terephthalsäure, die Isophthalsäure, die Phthalsäure und die 2,6 Naphthalindicarbonsäure.

Beispiele für aliphatische Dicarbonsäuren sind die Bernsteinsäure, die Glutarsäure, die Adipinsäure, die Pimelinsäure, die Korksäure, die Azelainsäure und die Sebazinsäure. Erfindungsgemäß bevorzugt einsetzbar sind die Adipinsäure und die Sebazinsäure, weniger bevorzugt einsetzbar sind die Bernsteinsäure, die Glutarsäure, die Adipinsäure, die Pimelinsäure, die Korksäure und die Azelainsäure.

Beispiele für die erfindungsgemäß einsetzbaren aliphatischen Diole sind Ethylenglykol, 1,3-Propandiol, 1,3-Butandiol, 1,4-Butandiol, 1,5-Pentandiol, 2,2-Dimethyl-1,3-Propandiol, Diethylenglycol, Triethylenglycol, 1,4-Cyclohexandimethanol und Neopentylglykol.

In der bevorzugten Ausführungsform beinhaltet der Polyester die folgenden Dicarboxylate und Alkylene, jeweils bezogen auf die Gesamtdicarboxylat- bzw. Gesamtalkylenmenge:

- 25 bis 95 Mol-%, bevorzugt 30 bis 90 Mol-% und besonders bevorzugt 40 bis 70 Mol-% Terephthalat,

- 0 bis 25 Mol-%, bevorzugt 5 bis 20 Mol-% und besonders bevorzugt 10 bis 20 Mol-% Isophthalat,

- 5 bis 75 Mol-%, bevorzugt 8 bis 70 Mol-% und besonders bevorzugt 11 bis 65 Mol-%, Sebazat

- 0 bis 50 Mol-%, bevorzugt 0 bis 40 Mol-% und besonders bevorzugt 0 bis 30 Mol-% Adipat.

- Mehr als 30 Mol-%, bevorzugt mehr als 40 Mol-% und besonders bevorzugt mehr als 50 Mol-% Ethylen oder Butylen.

Optional enthält das Deckschichtmaterial bis 15 Gew.-% von einem Polymer, welches mit Polyester unverträglich ist (anti-PET-Polymer). In einer bevorzugten Ausführungsform beträgt der Anteil an anti-PET-Polymer 2 bis 12 Gew.-%, bevorzugt 2 bis 10 Gew.-% und besonders bevorzugt 2 bis 8 Gew.-%.

Bis 10 Gew.-% des Materials der Deckschicht (B') besteht aus Partikeln, Additiven, Hilfsmitteln und/oder sonstigen in der Polyesterfolientechnologie üblicherweise verwendeten Zusatzstoffen.

Der Polyester für die Deckschicht (B') wird bevorzugt aus zwei physikalisch mischbaren Polyestern I und II und besonders bevorzugt aus drei physikalisch mischbaren Polyestern I, II und III hergestellt, die dem Extruder für diese Schicht (B') als Mischung zugeführt werden.

### Polyester I für die Deckschicht (B')

Der Anteil des Polyesters I in der Deckschicht (B'), der aus einem oder mehreren **aromatischen** Dicarboxylaten und einem oder mehreren aliphatischen Alkylenen besteht, beträgt 10 bis 60 Gew.-%. In der bevorzugten Ausführungsform beträgt der Anteil des Polyesters I 15 bis 55 Gew.-% und in der besonders bevorzugten Ausführungsform beträgt er 20 bis 50 Gew.-%.

Der Polyester I der erfindungsgemäßen Deckschicht (B') basiert in der bevorzugten Ausführungsform auf den folgenden Dicarboxylaten und Alkylenen, jeweils bezogen auf die Gesamtdicarboxylat- bzw. Gesamtalkylenmenge

- 60 bis 100 Mol-%, bevorzugt 62 bis 95 Mol-% und besonders bevorzugt 66 bis 93 Mol-% Terephthalat,

- 0 bis 40 Mol-%, bevorzugt 5 bis 38 Mol-% und besonders bevorzugt 7 bis 34 Mol-% Isophthalat, wobei sich die Mol-%-Angaben der angeführten Dicarbonsäuren immer zu 100 % ergänzen.

- Mehr als 50 Mol-%, bevorzugt mehr als 65 Mol-% und besonders bevorzugt mehr als 80 Mol-% Ethyleneinheiten.

Eventuell vorhandene restliche Anteile stammen von anderen aromatischen Dicarbonsäuren und anderen aliphatischen Diolen, wie sie für die Basisschicht (B") als hauptgeeignete andere aromatische Dicarbonsäuren aufgelistet sind.

Ganz besonders bevorzugt sind solche Copolyester, bei denen der Anteil an Terephthalat-Einheiten 60 bis 80 Mol-%, der entsprechende Anteil an Isophthalat-Einheiten 20 bis 40 Mol-% und der Anteil an Ethyleneinheiten 100 Mol-% beträgt. D.h. es handelt sich um ein Ethylenterephthalat- Ethylenisophthalat-Copolymer.

Es wurde gefunden, dass für den Fall, bei dem der Anteil an Polyester I in der Deckschicht (B') weniger als 10 Gew.-% beträgt, die Herstellbarkeit der Folie über die Coextrusionstechnologie deutlich erschwert, bzw. nicht mehr gewährleistet ist. Die Tendenz der Folie, an bestimmten Maschinenteilen zu kleben, insbesondere an metallischen Walzen, ist hier besonders hoch. Beträgt demgegenüber andererseits der Anteil an Polyester I in der Deckschicht (B') mehr als 60 Gew.-%, so wird das Siegelverhalten der Folie für die vorliegende Anwendung stark beeinträchtigt. Infolge der damit verbundenen Erhöhung des Schmelzpunktes hat die Siegelschicht (B') bei den üblich angewendeten Siegeltemperaturen nicht mehr die gewünschte Weichheit, die für die gewünschte Siegelung (auch durch partielle Kontamination) erforderlich ist.

Erfindungsgemäß ist hierbei der SV-Wert des Rohstoffes größer als 600, bevorzugt größer als 650 und besonders bevorzugt größer als 700. Ist der SV-Wert des Rohstoffes kleiner als 600, so wird die Extrudierbarkeit des Rohstoffes schlechter, was unerwünscht ist.

### Polyester II für die Deckschicht (B')

Entsprechend der vorliegenden Erfindung beträgt der Anteil von Polyester II in der Deckschicht (B') 20 bis 70 Gew.-%. In der bevorzugten Ausführungsform beträgt der Anteil von Polyester II 25 bis 65 Gew.-% und in der besonders bevorzugten Ausführungsform beträgt er 30 bis 60 Gew.-%.

Bevorzugt besteht der Polyester II aus einem Copolymeren aus aliphatischen und aromatischen Säurekomponenten, bei welchem die aliphatischen Säurekomponenten 20 bis 90 Mol-%, bevorzugt 30 bis 70 Mol-% und besonders bevorzugt 35 bis 60 Mol-% betragen, bezogen auf die Gesamtsäuremenge des Polyesters II. Der zu 100 Mol-% fehlende Dicarboxylatanteil stammt von aromatischen Säuren, insbesondere der Terephthalsäure und der Isophthalsäure, wobei bevorzugt die Terephthalsäure und weniger bevorzugt die Isophthalsäure zu nennen sind, sowie auf der glykolischen Seite von aliphatischen oder cycloaliphatischen oder aromatischen Diolen, wie sie bezüglich der Basisschicht ausführlich beschrieben werden.

Der Polyester II der erfindungsgemäßen Deckschicht (B') basiert zumindest auf den folgenden Dicarboxylaten und Alkylenen, jeweils bezogen auf die Gesamtdicarboxylat- bzw. Gesamtalkylenmenge

- 20 bis 70 Mol -%, bevorzugt 30 bis 70 Mol-% und besonders bevorzugt 35 bis 60 Mol-% Sebazat,

- 0 bis 50 Mol-%, bevorzugt 0 bis 45 Mol-% und besonders bevorzugt 0 bis 40 Mol-% Adipat,

- 10 bis 80 Mol-%, bevorzugt 20 bis 70 Mol-% und besonders bevorzugt 30 bis 60 Mol-% Terephthalat,

- 0 bis 30 Mol-%, bevorzugt 3 bis 25 Mol-% und besonders bevorzugt 5 bis 20 Mol-% Isophthalat, wobei sich die Mol-%-Angaben der angeführten Dicarbonsäuren immer zu 100 % ergänzen.

- Mehr als 30 Mol-%, bevorzugt mehr als 40 Mol-% und besonders bevorzugt mehr als 50 Mol-% Ethylen oder Butylen.

In der bevorzugten Ausführungsform basiert der Polyester II der erfindungsgemäßen Deckschicht (B') basiert zumindest auf den folgenden Dicarboxylaten und Alkylenen, jeweils bezogen auf die Gesamtdicarboxylat- bzw. Gesamtalkylenmenge

- 20 bis 70 Mol-%, bevorzugt 30 bis 65 Mol-% und besonders bevorzugt 35 bis 60 Mol-% Sebazat,

- 10 bis 80 Mol-%, bevorzugt 20 bis 70 Mol-% und besonders bevorzugt 30 bis 60 Mol-% Terephthalat,

- 0 bis 20 Mol-%, bevorzugt 3 bis 15 Mol-% und besonders bevorzugt 3 bis 10 Mol-% Isophthalat.

- Mehr als 30 Mol-%, bevorzugt mehr als 40 Mol-% und besonders bevorzugt mehr als 50 Mol-% Ethylen oder Butylen.

Eventuell vorhandene restliche Anteile stammen von anderen aromatischen Dicarbonsäuren und anderen aliphatischen Diolen, wie sie für die Basisschicht (B") aufgelistet sind.

Durch das Vorhandensein von mindestens 10 Mol-% aromatischer Dicarbonsäure wird gewährleistet, dass das Polymer II ohne Verklebungen z.B. im Coextruder oder in der Längsstreckung verarbeitbar ist.

Beträgt der Anteil an Polyester II in der Deckschicht (B') weniger als 20 Gew.-%, so wird das Siegel- und Peelverhalten der Folie stark beeinträchtigt. Die Siegelschicht hat dann - wie bereits oben beschrieben - bei den üblichen Siegeltemperaturen nicht mehr die gewünschte Weichheit, die für eine gute Siegelung (auch durch partielle Kontamination) erforderlich ist. Beträgt demgegenüber der Anteil an Polyester II in der Deckschicht (B') mehr als 70 Gew.-%, so wird die Herstellbarkeit der Folie über die Coextrusionstechnologie erschwert, bzw. sie ist nicht mehr gewährleistet. Die Tendenz der Folie an bestimmten Maschinenteilen zu kleben, insbesondere an metallischen Walzen, ist hier besonders hoch.

Erfindungsgemäß ist hierbei der SV-Wert des Rohstoffes größer als 900, bevorzugt größer als 950 und besonders bevorzugt größer als 1000. Ist der SV-Wert des Rohstoffes kleiner als 900, so wird die Trübung der Folie höher, was unerwünscht ist.

### Polyester III für die Deckschicht (B')

Der Anteil des Polyesters III, der aus einem oder mehreren aromatischen Dicarboxylaten und einem oder mehreren aliphatischen Alkylenen besteht, beträgt in der Deckschicht (B') 0 bis 15 Gew.-% und ist optional. In der bevorzugten Ausführungsform beträgt der Anteil des Polyesters III 3 bis 12 Gew.-% und in der besonders bevorzugten Ausführungsform beträgt er 4 bis 10 Gew.-%.

Im Allgemeinen basiert der Polyester III der erfindungsgemäßen Deckschicht (B') auf den folgenden Dicarboxylaten und Alkylenen, jeweils bezogen auf die Gesamtdicarboxylat- bzw. Gesamtalkylenmenge

- 80 bis 98 Mol-%, bevorzugt 82 bis 96 Mol-% und besonders bevorzugt 74 bis 95 Mol-% Terephthalat,

- 2 bis 20 Mol-%, bevorzugt 4 bis 18 Mol-% und besonders bevorzugt 5 bis 17 Mol-% Isophthalat.

- Mehr als 50 Mol-%, bevorzugt mehr als 65 Mol-% und besonders bevorzugt mehr als 80 Mol-% Ethyleneinheiten.

Eventuell vorhandene restliche polymere Anteile stammen von anderen aromatischen Dicarbonsäuren und anderen aliphatischen Diolen, wie sie bereits zuvor für die Basisschicht (B") als Haupt-geeignete andere aromatische Dicarbonsäuren aufgelistet sind.

Bei der Mischung der Polyester I, II und III ist darauf zu achten, dass sich die Anteile in Gew.-% zu 100 addieren.

Ganz besonders bevorzugt sind solche Copolyester, bei denen der Anteil an Terephthalat-Einheiten 84 bis 94 Mol-%, der entsprechende Anteil an Isophthalat-Einheiten 6 bis 16 Mol-% (wobei die Dicarboxylatanteile sich wiederum zu 100 Mol-% ergänzen) und der Anteil an Ethyleneinheiten 100 Mol-% beträgt. D.h. es handelt sich wiederum um ein Polyethylen-terephthalat/isophthalat.

In einer besonders bevorzugen Ausführungsform enthält der Polyester III ein geeignetes Antiblockmitteln (siehe weiter unten) in einem Anteil von 5 bis 25 Gew.-%. In dieser bevorzugten Ausführungsform handelt es sich bei Polyester III um ein Masterbatch, das vorzugsweise über die Extrusionstechnologie hergestellt wird. Das Antiblockmittel wird in diesem Fall bei der Extrusion (vorzugsweise Zweischneckenextruder) in deutlich höherer Konzentration dem Polyesterrohstoff zugegeben, als es nachher in der Folie vorhanden ist. Erfindungsgemäß ist hierbei der SV-Wert des Masterbatchs größer als 400, bevorzugt größer als 425 und besonders bevorzugt größer als 450.

Bevorzugt enthält die Deckschicht (B') eine Mischung aus den Polyestern I, II und III. Gegenüber der Verwendung von nur einem Polyester mit vergleichbaren Komponenten und vergleichbaren Anteilen der Komponenten weist eine Mischung die folgenden Vorteile auf:

- Die Mischung der beiden Polyester I und II ist von den jeweiligen Glasübergangstemperaturen ($T_g$) gesehen leichter zu extrudieren als ein einzelner Rohstoff mit vergleichbarer Konzentration der jeweiligen Polymerkomponenten. Untersuchungen haben gezeigt, dass eine Mischung aus Polymeren mit hohem Tg (Polyester I und III) und einem Polymeren mit niedrigem Tg (Polyester II) weniger zum Verkleben im Coextruder neigt als ein einziges Polymer mit einem entsprechenden mittleren Tg;

- Mit der Mischung können praktisch gesehen die gewünschten Siegel- und Peeleigenschaften individueller eingestellt werden als bei Einsatz eines einzigen Polyesters.

Insbesondere die Zugabe von Partikeln gestaltet sich bei Polyester III einfacher als bei Polyester I oder II.

Zweckmäßigerweise beträgt die Glasübergangstemperatur von Polyester I mehr als 50 °C. Bevorzugt beträgt die Glasübergangstemperatur von Polyester I und III mehr als 55 °C und besonders bevorzugt mehr als 60 °C. Ist die Glasübergangstemperatur von Polyester I und III kleiner als 50 °C, kann die Folie nicht verfahrenssicher hergestellt werden. Die Klebeneigung der Deckschicht (B') z.B. gegenüber Walzen ist dabei so groß, dass mit häufigen Folienabrissen gerechnet werden muss.

Zweckmäßigerweise beträgt die Glasübergangstemperatur von Polyester II weniger als 10 °C. Bevorzugt beträgt die Glasübergangstemperatur weniger als 8 °C und besonders bevorzugt weniger als 6 °C. Ist die Glasübergangstemperatur von Polyester II größer als 10 °C, so hat die Siegelschicht bei den üblichen Siegeltemperaturen nicht mehr die gewünschte Weichheit, wie sie für eine Siegelung (auch durch partielle Kontamination) erforderlich ist.

### Anti PET-Polymer in der Deckschicht (B')

Optional enthält die heißsiegelbare und peelfähige Deckschicht (B') ein mit Polyester unverträgliches Polymer (anti-PET-Polymer) in einer bestimmten Konzentration. Der Anteil des anti-PET-Polymers beträgt 0 bis 15 Gew.-%, bezogen auf die Masse der Deckschicht (B'). In einer bevorzugten Ausführungsform beträgt der Anteil des anti-PET-Polymers 2 bis 10 Gew.-% und in der besonders bevorzugten Ausführungsform beträgt er 2 bis 8 Gew.-%, ebenfalls bezogen auf die Masse der Deckschicht (B').

Beispiele für unverträgliche Polymere (anti-PET-Polymer) sind Polymere auf Basis von Ethylen (z.B. LLDPE, HDPE), Propylen (PP), Cycloolefinen (CO), Amiden (PA) oder Styrol (PS). In einer bevorzugten Ausführungsform wird als polyesterunverträgliches Polymer ein Copolymer verwendet. Beispiele hierfür sind Copolymere auf Basis von Ethylen (C2/C3, C2/C3/C4- Copolymere), Propylen (C2/C3, C2/C3/C4- Copolymere), Butylen (C2/C3, C2/C3/C4- Copolymere) oder auf Basis von Cycloolefinen (Norbornen/Ethylen-, Tetracyclododecen/Ethylen-Copolymere). In einer der besonders bevorzugten Ausführungsformen ist das mit Polyester unverträgliche Polymer (anti-PET-Polymer) ein Cycloolefincopolymer (COC). Solche Cycloolefincopolymere sind beispielsweise in der EP-A 1 068 949 oder in der JP 05-009319 beschrieben, auf die hier Bezug genommen wird.

Unter den Cycloolefincopolymeren sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind Cycloolefincopolymere (COC), die polymerisierte Einheiten acyclischer Olefine, insbesondere Ethylen, enthalten. Ganz besonders bevorzugt sind Norbonen/Ethylen- und Tetracyclododecen/Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren).

Die COC's weisen im Allgemeinen Glasübergangstemperaturen zwischen -20 und 400 °C auf. Für die Erfindung sind solche COC's geeignet, die eine Glasübergangstemperatur von kleiner als 120 °C, bevorzugt kleiner als 100 °C und besonders bevorzugt kleiner als 80 °C aufweisen. Vorzugsweise sollte die Glasübergangstemperatur oberhalb von 50 °C liegen, bevorzugt oberhalb von 55 °C, insbesondere oberhalb von 60 °C. Die Viskositätszahl (Dekalin, 135 °C, DIN 53 728) liegt zweckmäßigerweise zwischen 0,1 und 200 ml/g, bevorzugt zwischen 50 und 150 ml/g.

Folien, die ein COC mit einer Glasübergangstemperatur von kleiner als 80 °C enthalten, zeichnen sich gegenüber solche, die ein COC mit einer Glasübergangstemperatur von größer 80° C enthalten, durch eine niedrigere Trübung und durch eine verbesserte Siegelbarkeit aus.

EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf Cycloolefincopolymere, hergestellt mit Katalysatoren, die auf löslichen Metallocenkomplexen basieren, wird besonders bevorzugt zurückgegriffen. Solche COC sind käuflich erhältlich; z.B. Topas® (Ticona, Frankfurt).

Die Zugabe des anti-PET-Polymers begünstigt die Siegelung und das Verarbeitungsverhalten, hier insbesondere die Wicklung der erfindungsgemäßen Folie. Beträgt der Anteil des COC's in der bevorzugten Ausführungsform weniger als 2 Gew.-%, so ist ein positiver Einfluss des Polymeren auf die Siegelung und das Verarbeitungsverhalten der Menüschale nicht mehr gegeben. Die Menüschale neigt zum Verblocken. Andererseits sollte der Anteil von polyesterunverträglichem Polymer 15 Gew.-% nicht überschreiten, da die Trübung der Folie sonst zu hoch wird.

### Antiblockmittel in der Deckschicht (B')

Zur Erzielung eines guten self-ventings der heißsiegelbaren und peelfähigen Deckschicht (B'), einer guten Verarbeitbarkeit der Oberfolie (B), aber auch zur Verbesserung des Abziehverhaltens der Oberfolie (B) von der Menüschale (aus Unterfolie (A) durch Thermoformen hergestellt) nach dem Garen, ist es erfindungsgemäß von Vorteil, die heißsiegelbare und peelfähige Deckschicht (B') mit Hilfe von geeigneten Antiblockmitteln (= Partikel) weiter zu modifizieren.

Für ein gutes self-venting der heißsiegelbaren und peelfähigen Deckschicht (B') muss der Durchmesser $d_{50}$ der Teilchen (= Partikel) in einem erfindungsgemäßen Bereich liegen. Als besonders vorteilhaft hat es sich dabei erwiesen, Teilchen mit einem mittleren Partikeldurchmesser $d_{50}$ von 1,5 bis 5,0 μm, bevorzugt von 1,5 bis 4,5 μm und besonders bevorzugt von 1,5 bis 4,0 μm zu verwenden. Bei der Verwendung von Teilchen mit einem Durchmesser von unterhalb 1,5 μm, ist ein positiver Einfluss der Partikel auf das self-venting und dem Peelverhalten der Deckschicht (B') nicht gegeben. Die Folie neigt nach dem Garen beim Abziehen von der Menüschale zum Ein- oder Weiterreißen, was unerwünscht ist. Teilchen mit einem Durchmesser von größer als 5,0 μm verursachen in der Regel eine zu hohe Trübung und einen zu geringen Glanz der Folie, sowie Filterprobleme.

Zur Bereitstellung des gewünschten guten self-ventings, eines guten Peelverhalten, einer guten Wickelung und einer guten Verarbeitbarkeit der Folie hat es sich als günstig erwiesen, wenn die heißsiegelbare und peelfähige Deckschicht (B') Partikel in einer Konzentration von mehr als 0,04 Gew.-%, bevorzugt von mehr als 0,05 Gew.-% und besonders bevorzugt von mehr als 0,06 Gew.-% enthält. Die maximale Konzentration der Partikel beträgt 10,00 Gew.-%, bevorzugt 8,00 Gew.-% und besonders bevorzugt 6,00 Gew.-%. Enthält die Deckschicht (B') Partikel in einer Konzentration von weniger als 0,04 Gew.-%, so ist ein positiver Einfluss auf das self-venting nicht mehr gegeben. Enthält die Deckschicht (B') Partikel in einer Konzentration von mehr als 10 Gew.-%, so wird die Trübung der Folie zu groß.

In einer bevorzugten Ausführungsform ist in der heißsiegelbaren und peelfähigen Deckschicht (B') der Partikeldurchmesser $d_{50}$ größer als die Dicke dieser Schicht. Es hat sich erfindungsgemäß als günstig erwiesen, ein Partikeldurchmesser/Schichtdicken-Verhältnis von größer als 1,0, bevorzugt von größer als 1,1 und besonders bevorzugt von größer als 1,2 einzuhalten. In diesen Fällen ist ein besonders positiver Einfluss der Partikel auf das self-venting und das Abziehverhalten der Folie von der Menüschale nach dem Garen gegeben.

Erfindungsgemäß bevorzugte Partikel sind synthetisch hergestellte, amorphe $SiO_2$-Partikel in kolloidaler Form, die hervorragend in die Polymermatrix eingebunden werden. Zur Herstellung der $SiO_2$-Partikel wird auf den Stand der Technik verwiesen; das Verfahren ist z.B. in der EP 1 475 228 B1 ausführlich offenbart.

Typische andere Partikel, die in der Deckschicht (B') verwendet werden können, sind anorganische und/oder organische Partikel, beispielsweise Calciumcarbonat, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Titandioxid oder Kaolin.

### Dicke der Deckschicht (B')

Erfindungsgemäß weist die heißsiegelbare und peelfähige Deckschicht (B') eine Dicke von 1,5 bis 5 μm auf. Ist die Dicke der Deckschicht (B') geringer als 1,5 μm, so ist die Siegelung der Oberfolie (B) zur Unterfolie (A) nicht ausreichend. Ist die Deckschichtdicke größer als 5 μm, so verschlechtert sich das self-venting der Packung, was unerwünscht ist.

Die Deckschicht (B') zeigt gute Siegeleigenschaften gegen sich selbst (Fin-Siegelung, Deckschicht (B') gegen Deckschicht (B')), insbesondere aber gute Siegel- und Peeleigenschaften gegen die Unterfolie (A). Nach einer Heißsiegelung bei 160 °C (460 N, 2 s) ist die Siegelnahtfestigkeit der Deckschicht (B') gegen sich selbst (Fin-Siegelung) und gegen die Unterfolie (A) größer als 2 N/15 mm und beträgt max. 10 N/15 mm. In allen Fällen wird dabei eine gegen die Unterfolie (A) peelfähige Siegelung erzielt, auch für den Fall, bei dem die Folie partiell mit Fleischsaft oder dergleichen kontaminiert ist.

### Basisschicht (B")

### Verwendete Polymere für die Basisschicht (B")

Die Basisschicht (B") der Oberfolie (B) besteht zu mindestens 90 Gew.-% aus einem thermoplastischen Polyester, der aus Dicarbonsäure- und aus Diol-abgeleiteten Einheiten, bzw. Dicarboxylaten und Alkylenen aufgebaut ist und im Allgemeinen die folgenden Dicarboxylate und Alkylene, jeweils bezogen auf die Gesamtdicarboxylat- bzw. Gesamtalkylenmenge, beinhaltet

- mehr als 90 Mol-%, bevorzugt mehr als 95 Mol-% Terephthalat,

- mehr als 90 Mol-%, bevorzugt mehr als 95 Mol-% an Ethylen.

Andere zur Bildung des Polyesters geeignete aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht.

Andere aromatische Dicarbonsäuren sind bevorzugt Benzoldicarbonsäuren, Naphtalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$) Alkandisäuren besonders geeignet, wobei der Alkanteil geradkettig oder verzweigt sein kann.

Die Herstellung der Polyester für die Basisschicht (B") kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan, Aluminium oder Germanium-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders vorteilhaft hat es sich erwiesen, wenn die Zwischenprodukte in Gegenwart von Titandioxid oder Germanium-Verbindungen polykondensiert werden, beziehungsweise, die Direktveresterungsverfahren in Gegenwart von Polykondensationskatalysatoren wie Titandioxid oder Germanium-Verbindungen durchgeführt werden. Die biaxial orientierte Polyesterfolie ist damit antimonfrei. Angestrebt wird im besonders bevorzugten Fall eine biaxial orientierte Polyesterfolie, die kein Antimon enthält und somit in Verpackungsanwendungen, bei denen die Folie in direktem Lebensmittelkontakt steht, eingesetzt werden kann.

Die Basisschicht (B") kann zusätzlich übliche Additive wie beispielsweise Stabilisatoren (UV, Hydrolyse), insbesondere aber Wärmestabilisatoren (z.B. Irganox 1010) oder weitere Füller (z.B. Farbpigmente), in den vom Hersteller empfohlenen Konzentrationen enthalten. Diese Additive werden zweckmäßig dem Polymer bzw. der Polymermischung bereits vor dem Aufschmelzen zugesetzt.

Die Basisschicht (B") enthält zusätzlich Regenerat, das bei der Herstellung der Folie in einer Menge von bis zu 60 Gew.-% der Extrusion zugeführt wird, ohne dass dabei die physikalischen, insbesondere aber die optischen Eigenschaften der Folie nennenswert negativ beeinflusst werden.

*Radikalfänger in der Folie*

Wie zuvor bei der Unterfolie beschrieben, ist auch die Oberfolie beim sogenannten Cook-in-Verfahren einer erhöhten Wärmebelastung ausgesetzt.

Prozessbedingt wird dabei die Folie über einen Großteil ihrer Fläche wenig thermisch belastet. Nur im Randbereich der Packung und hier insbesondere an den Ecken der Packung (Siegelrand) findet eine deutlich erhöhte thermische Belastung der Folie statt. Während der übrige Teil der thermogeformten Folie durch das verdunstende Wasser Temperaturen deutlich unterhalb von 160 °C erfährt, wird der Eckenbereich der Packung der Ofentemperatur (z.B. 220 °C) für die gesamte Garzeit ausgesetzt.

Im Extremfall wird dabei die Folie im Eckebereich über mehr als 2 h bei einer Temperatur von 220 °C thermisch belastet, wobei bei dieser erhöhten Temperatur Sauerstoff in das Polymere eindringen kann.

Als Folge hiervon kann es durchaus vorkommen, dass die Packung und damit die Folie insbesondere in den Ecken anfängt, spröde zu werden und zur Splitterbildung neigt. Dies ist äußerst unerwünscht und muss vermieden werden.

Ebenso wie für die Folie (A) beschrieben, enthält auch die Basisschicht (B") bevorzugt einen oder mehrere Radikalfänger, wenn eine erhöhte Thermostabilität gefordert wird. Der/die Radikalfänger basieren bevorzugt auf phenolischen Antioxidantien.

Es wurde überraschend gefunden, dass die Folie, die einen oder mehrere Radikalfänger enthält, eine deutlich erhöhte Temperaturresistenz aufweist, so dass aus ihnen hergestellte Verpackungen mehr als eine Stunde in einem Ofen bei Temperaturen von oberhalb 220 °C verbleiben können, ohne dabei zu verspröden.

In einer bevorzugten Ausführungsform enthält die Folie nach der vorliegenden Erfindung 400 -2000 ppm eines Radikalfängers, wobei der Gehalt bevorzugt zwischen 500 - 2000 ppm und insbesondere bevorzugt zwischen 600 - 2000 ppm liegt. Niedrigere Gehalte als 400 ppm führen tendenziell zu einem Versagen im Ofen (= Splitterbildung) und höhere Gehalte als 2000 ppm haben keine weitere verbessernde Wirkung auf die Folie und verringern daher nur die Wirtschaftlichkeit und können zu einer Migration des Stabilisators aus der Folie in ein verpacktes Lebensmittel führen. Gehalte oberhalb von 2000 ppm führen zudem tendenziell zur Bildung von Gelen und einem nicht gewünschten Gelbstich der Folie.

Als Radikalfänger kann sowohl eine Verbindung (bevorzugt) oder eine Mischung aus verschiedenen Radikalfängern eingesetzt werden. Der/die verwendete(n) Radikalfänger werden bevorzugt aus der Gruppe der phenolischen Antioxidantien ausgewählt.

Bevorzugte Radikalfänger sind pentaerythritol tetrakis [3-(3,5-di-tert-butyl-4-hydroxyphenyl)-propionate] (CAS-Nr. 6683-19-8) und 1,3,5-Trimethyl-2,4,6-tris(3,5-di-tert-butyl-4-hydroxybenzyl)-benzol (CAS-Nr. 1709-70-2), erhältlich unter dem Handelsnahmen Irganox 1010 und Irganox 1330 der Firma BASF.

Die Wirksamkeit des Radikalfängers kann direkt an der Verpackung, z.B. nach Entnahme der Verpackung aus dem Ofen getestet werden. Die Verpackung wird dabei als gut (= für die Anwendung geeignet) bezeichnet, wenn an keiner Stelle der Folie nach der vorliegenden Erfindung ein Absplittern festgestellt werden.

*Aufbau der Oberfolie (B)*

Die erfindungsgemäße heißsiegelbare und peelfähige Oberfolie (B) kann zwei- oder dreischichtig aufgebaut sein. Zur Erzielung der vorgenannten Eigenschaften, insbesondere der geforderten sehr guten optischen Eigenschaften hat sich ein dreischichtiger Aufbau der Oberfolie (B) mit den Schichten B'B"B‴ als günstig erwiesen. Die erfindungsgemäße Oberfolie (B) umfasst dann die Basisschicht B", die heißsiegelbare und peelfähige Deckschicht B' auf der einen Seite der Basisschicht B" und die Deckschicht B‴ auf der anderen Seite der Basisschicht B".
Die Dicke der Deckschicht B‴ liegt im Allgemeinen zwischen 0,5 und 3 $\mu$m und besteht vorzugsweise aus dem Polyester, der auch bei der Basisschichtschicht (B") zum Einsatz kommt.

*Dicke der Oberfolie (B)*

Die Gesamtdicke der erfindungsgemäßen Polyesterfolie (B) kann innerhalb bestimmter Grenzen variieren. Sie beträgt 20 bis 125 $\mu$m, bevorzugt 25 bis 100 $\mu$m und besonders bevorzugt 30 bis 75 $\mu$m. Ist die Dicke der Folie (B) geringer als 20 $\mu$m, so sind die Mechanik und die Barriereeigenschaften der Folie nicht ausreichend. Ist die Dicke der Folie (B) dagegen größer als 125 $\mu$m, so verschlechtert sich die Siegelfähigkeit der Folie und außerdem wird die Herstellung der Folie unwirtschaftlich, was beides unerwünscht ist.

*Verfahren zur Herstellung der Oberfolie (B)*

Die Erfindung betrifft daneben ein Verfahren zur Herstellung der erfindungsgemäßen Polyesterfolie (B) nach dem aus der Literatur bekannten Koextrusionsverfahren.
Im Rahmen dieses Verfahrens wird so vorgegangen, dass die den einzelnen Schichten (B'B" und, falls vorhanden, B‴) der Oberfolie (B) entsprechenden Schmelzen durch eine Flachdüse koextrudiert werden, die so erhaltene Folie zur Verfestigung auf einer oder mehreren Walzen abgezogen wird, die Folie anschließend biaxial gestreckt und die biaxial gestreckte Folie thermofixiert wird.
Die biaxiale Verstreckung wird sequenziell durchgeführt. Dabei wird vorzugsweise erst in Längsrichtung (d.h. in Maschinenrichtung) und anschließend in Querrichtung (d.h. senkrecht zur Maschinenrichtung) verstreckt. Das Verstrecken in Längsrichtung lässt sich mit Hilfe mehrerer entsprechend dem angestrebten Streckverhältnis verschieden schnell laufenden Walzen durchführen. Zum Querverstrecken benutzt man allgemein einen entsprechenden Kluppenrahmen.
Zunächst werden, wie beim Koextrusionsverfahren üblich, die Polymere, bzw. die Polymermischungen, für die einzelnen Schichten in jeweiligen Extrudern komprimiert und verflüssigt, wobei die gegebenenfalls als Zusätze vorgesehenen Additive bereits im Polymer bzw. in der Polymermischung enthalten sein können. Die Schmelzen werden gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.
Die Temperatur, bei der die Streckung durchgeführt wird, kann in einem relativ großen Bereich variieren und richtet sich nach den gewünschten Eigenschaften der Folie. Im Allgemeinen werden die Längsstreckung bei einer Temperatur im Bereich von 80 bis 130 °C und die Querstreckung bei einer Temperatur im Bereich von 90 bis 150 °C durchgeführt. Das Längsstreckverhältnis liegt allgemein im Bereich von 2,5:1 bis 6:1, bevorzugt von 3,0:1 bis 5,5:1. Das Querstreckverhältnis liegt allgemein im Bereich von 3,0:1 bis 5,0:1, bevorzugt von 3,5:1 bis 4,5:1.
Bei der nachfolgenden Thermofixierung wird die Folie über eine Zeitdauer von etwa 0,1 bis 15 s bei einer Temperatur von ca. 160 bis 240 °C gehalten. Anschließend wird die Folie in üblicher Weise aufgewickelt.

*Erfindungsgemäßen Eigenschaften*

Die erfindungsgemäße heißsiegelbare und peelfähige Polyesterfolie (B), hergestellt nach dem erfindungsgemäßen Verfahren, besitzt eine Reihe von Eigenschaften, von denen untenstehend die wichtigsten aufgeführt sind.
Die Trübung der heißsiegelbaren und peelfähigen Polyesterfolie (B) ist kleiner als 20,0 %. Bevorzugt beträgt die Trübung der Polyesterfolie weniger als 16,0 % und besonders bevorzugt weniger als 12,0 %.
Die Clarity der heißsiegelbaren und peelfähigen Polyesterfolie (B) ist größer als 70 %. Bevorzugt beträgt die Clarity der Polyesterfolie mehr als 75 % und besonders bevorzugt mehr als 80 %.
Die Transparenz der heißsiegelbaren und peelfähigen Polyesterfolie (B) ist größer als 88. Bevorzugt beträgt die Transparenz mehr als 89 und besonders bevorzugt mehr als 90.

Der Glanz der heißsiegelbaren und peelfähigen Polyesterfolie (B) ist größer als 70, in der bevorzugten Ausführungsform größer als 75 und in der besonders bevorzugten Ausführungsform größer als 80.

Die Deckschicht (B') zeigt gute Siegeleigenschaften gegen sich selbst, insbesondere aber gute Siegel- und Peeleigenschaften gegen die Unterfolie (A). Bei einer Siegeltemperatur von deutlich unter dem Schmelzpunkt der Basisschicht (B") haftet die Folie gut auf den genannten Materialien. Nach der Siegelung bei 160 °C (460 N, 2 s) ist die Siegelnahtfestigkeit der Deckschicht (B') gegen sich selbst und gegen die Unterfolie (A) größer als 2 N/15 mm und beträgt max. 10 N/15 mm. In allen Fällen wird dabei eine gegen die Unterfolie (A) peelfähige Siegelung erzielt (zumindest beim Abziehen der Folie nach dem Garen).

Die Polyesterfolie (B) zeichnet sich durch ein sehr gutes Wickelverhalten aus.

Die Polyesterfolie (B) eignet sich hervorragend zum Verpacken von Nahrungs- und Genussmitteln, insbesondere zu der Verpackung von Nahrungs- und Genussmitteln in Menüschalen, bei denen heißsiegelbare und peelfähige Polyesterfolien zum Öffnen der Verpackung verwendet werden.

Die Tabelle 2 fasst u.a. die wichtigsten erfindungsgemäßen Folieneigenschaften zusammen.

## Tabelle 2

| Deckschicht (B') | Erfindungsgemäßer Bereich | Bevorzugt | Besonders bevorzugt | Einheit | Messmethode |
|---|---|---|---|---|---|
| Anteil Einheiten im erfindungsgemäßen Polyester, aufgebaut auf aromatischen Dicarbonsäuren | 25 bis 95 | 40 bis 90 | 50 bis 88 | Mol-% | |
| Anteil Einheiten im erfindungsgemäßen Polyester, aufgebaut auf aliphatischen Dicarbonsäuren | 5 bis 75 | 10 bis 60 | 12 bis 50 | Mol-% | |
| Anti-PET-Polymer | bis 15 | 2 bis 12 | 2 bis 8 | Gew.-% | |
| Polyester I | 10 bis 60 | 15 bis 55 | 20 bis 50 | Gew.-% | |
| Polyester II | 20 bis 70 | 25 bis 65 | 30 bis 60 | Gew.-% | |
| Polyester III | bis 15 | 3 bis 12 | 4 bis 10 | Gew.-% | |
| Partikeldurchmesser $d_{50}$ | 1,5 bis 5,0 | 1,5 bis 4,5 | 1,5 bis 4,0 | µm | intern |
| Füllstoffkonzentration | 0,04 bis 10,0 | 0,05 bis 8,0 | 0,06 bis 6,0 | % | intern |
| Dicke der Deckschicht B' | 1,5 bis 5,0 | 1,6 bis 5,0 | 1,7 bis 50 | µm | |
| Partikeldurchmesser/Schichtdicken-Verhältnis | >/= 1,0 | >/= 1,1 | >/= 1,2 | | |
| **Eigenschaften** | | | | | |
| Dicke der Folie | 20 bis 125 | 25 bis 100 | 30 bis 75 | µm | |
| Siegelnahtfestigkeit (B') gegen sich selbst und gegen Unterfolie (A) | 2,0 bis 10 | 2,0 bis 8 | 2,0 bis 6 | N/15 mm | intern |
| Glanz der Deckschichten B' und B''' | > 70 und > 100 | > 75 und > 110 | > 80 und > 120 | | DIN 67530 |
| Trübung der Folie | < 20 | < 16 | < 12 | % | ASTM D 1003-61, Methode A |
| Clarity der Folie | > 70 | > 75 | > 80 | % | ASTM D 1003 |
| Transparenz der Folie | > 88 | > 89 | > 90 | | DIN 1033-77 |

DS: Deckschicht, >/=: größer/gleich als

**Definitionen und Vereinbarungen**

Unter heißsiegelbar (auch heißsiegelfähig) wird allgemein die Eigenschaft einer mehrschichtigen, mindestens eine Basisschicht (B) enthaltenden Polyester-Folie verstanden, die zumindest eine heißsiegelbare Deckschicht (B') enthält. Die heißsiegelbare Deckschicht (B') wird mittels Siegelbacken durch Anwendung von Wärme (110 bis 220 °C) und Druck (1 bis 6 bar) in einer bestimmten Zeit (0,1 bis 4 sec) mit einem Substrat aus thermoplastischem Kunststoff, z.B. Menüschalen aus Polyester oder aus APET, verbunden, ohne dass dabei die Basisschicht (B) selbst plastisch wird. Um dies zu erreichen, besitzt das Polymere der Deckschicht (B') im Allgemeinen einen deutlich niedrigeren Schmelzpunkt als das Polymere der Basisschicht (B"). Wird als Polymeres für die Basisschicht beispielsweise Polyethylenterephthalat mit einem Schmelzpunkt von 254 °C verwendet, so beträgt der Schmelzpunkt der heißsiegelbaren Deckschicht (B') im Allgemeinen deutlich weniger als 220 °C. Im vorliegenden Fall ist das Hauptpolymere für die siegelfähige Deckschicht (B') der Oberfolie nahezu zu 100 % amorph.

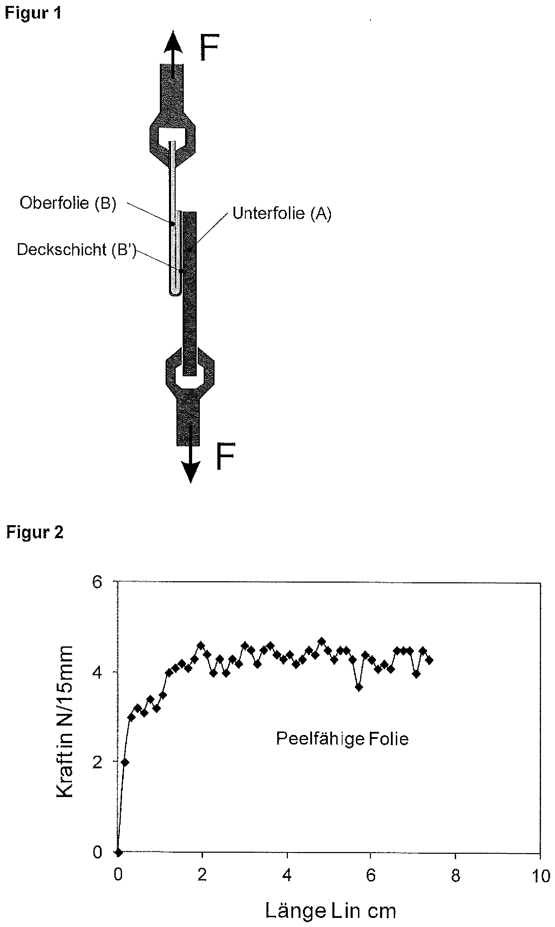

Unter peelfähig wird die Eigenschaft einer Polyester-Folie verstanden, die zumindest eine heißsiegelbare und peelfähige Deckschicht (B') enthält, die nach der Heißsiegelung auf APET/RPET-und CPET-Menüschalen derart wieder von der Menüschale abgezogen werden kann, dass dabei die Folie weder ein- noch abreißt. Der Verbund aus heißsiegelbarer und peelfähiger Folie und Menüschale geht beim Abziehen der Folie von der Menüschale i.d.R. in der Naht zwischen der Heißsiegelschicht und der Menüschalenoberfläche auf (vgl. auch Ahlhaus, O.E.: Verpackung mit Kunststoffen, Carl Hanser Verlag, S. 271, 1997, ISBN 3-446-17711 - 6). Beim Abziehen der auf einen Teststreifen der Menüschale heißgesiegelten Folie in einem Zug-Dehnungs-Prüfgerät unter einem Schälwinkel von 180 ° entsprechend Figur 1 wird ein Reiß-Dehnverhalten der Folie gemäß Figur 2 erhalten. Bei Beginn des Abschälens der Folie von dem Substrat steigt die dazu erforderliche Kraft gemäß Figur 2 bis zu einem bestimmten Wert (z.B. 5 N/15mm) an und bleibt dann über den gesamtem Schälweg in etwa konstant, ist allerdings mit mehr oder weniger großen Schwankungen behaftet (ca. +/- 20%).

Zur Charakterisierung der Rohstoffe und der Folien wurden im Rahmen der vorliegenden Erfindung die folgenden Messmethoden benutzt.

## Messmethoden

### E-Modul

Der E-Modul wird gemäß DIN EN ISO 572-1 und -3 (Probekörper Typ 2) an 100 mm $\times$ 15 mm großen Folienstreifen bestimmt. Der Flächen E-Modul wird gemäß folgender Formel berechnet

$$E_{Fläche} = \sqrt{(E_{MD}^2 + E_{TD}^2)}$$

### $\sigma_5$-Wert

Der $\sigma_5$-Wert wird gemäß DIN EN ISO 572-1 und -3 (Probekörper Typ 2) an 100 mm $\times$ 15 mm großen Folienstreifen bestimmt.

### Dichte

Die Dichte der Folie wird nach ASTM-D 1505-68, Methode C, bestimmt.

### Trübung, Clarity und Transparenz

Die Messung an den Polyesterfolien erfolgt am Hazegard Hazemeter XL-211 der Fa. BYK Gardner. Die Trübung nach Hölz wurde nach ASTM-D 1003-61, Methode A, bestimmt. Die Messung der Clarity geschieht nach ASTM-D 1003 mittels Hazeguard, jedoch jetzt am "clarity port" des Messgerätes. Die Messung der Transparenz geschieht nach ASTM-D 1003-61, Methode A. Die Messungen werden sämtlich direkt nach Herstellung an der Folie durchgeführt.

### Glanz 20°

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird ein Einstrahlwinkel von 20 ° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

### Standardviskosität SV

Die Standardviskosität in verdünnter Lösung SV wurde, angelehnt an DIN 53 728 Teil 3, in einem Ubbelohde Viskosimeter bei (25 $\pm$ 0,05) °C gemessen. Dichloressigsäure (DCE) wurde als Lösemittel verwendet. Die Konzentration des gelösten Polymers betrug 1 g Polymer /100 mL reines Lösemittels. Die Auflösung des Polymers erfolgte 1 Stunde bei 60 °C. Wurden die Proben nach dieser Zeit nicht vollständig gelöst, wurden noch bis zwei Auflösungsversuche jeweils 40 Min bei 80 °C durchgeführt und die Lösungen anschließend 1 Stunde bei einer Drehzahl von 4100 min$^{-1}$ zentrifugiert.

Aus der relativen Viskosität ($\eta_{rel} = \eta / \eta_s$) wird der dimensionslose SV-Wert wie folgt ermittelt:

$$SV = (\eta_{rel} - 1) \times 1000$$

Der Anteil an Partikeln in der Folie bzw. Polymerrohstoff wurde mittels Aschebestimmung ermittelt und durch entsprechende Mehreinwaage korrigiert. D.h.:

$$\text{Einwaage} = \frac{(\text{Einwaage entsprechend 100 \% Polymer})}{[(100 - \text{Partikelgehalt in Gew.-\%}) \cdot 0,01]}$$

**Mittlerer Partikeldurchmessers $d_{50}$**

Die Bestimmung des mittleren Durchmessers $d_{50}$ wird mittels Malvern Master Sizer 2000 am einzusetzenden Partikel durchgeführt; definitionsgemäß handelt es sich hierbei um den Volumenmedian $dv_{50}$. Die Proben werden dazu in eine Küvette mit Wasser gegeben und diese dann in das Messgerät gestellt. Mittels Laser wird die Dispersion analysiert und aus dem Signal durch Vergleich mit einer Eichkurve die Partikelgrößenverteilung bestimmt. Die Partikelgrößenverteilung ist durch zwei Parameter gekennzeichnet, dem Medianwert $d_{50}$ (= Lagemaß für den Mittelwert) und dem Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse den gewünschten $d_{50}$-Wert. Hierbei handelt es sich um den Volumenmedian $d_{v50}$.

Messungen an der mittels dieser Partikel hergestellten Folie ergeben einen um 15 - 25 % niedrigeren $d_{50}$ Wert als die eingesetzten Partikel.

**Durchstoßfestigkeit (≈ Durchstichversuch)**

Die Durchstoßfestigkeit (≈ Durchstichversuch) wird nach EN 14477 gemessen. Im Verpackungsbereich ist die Beanspruchung mit harten, spitzen oder kantigen Gegenständen eine wichtige Größe. Die Kenntnis der Durchstoßfestigkeit ist dann interessant, wenn die Folien als Verpackungsmaterial z. B. für Lebensmittel oder für scharfkantige Teile verwendet werden. Mit dem Durchstichversuch nach EN 14477 wird dieses Verhalten gegenüber einer Spitze mit 0,8 mm Durchmesser gemessen. Dieser Versuch ist auch als Parken Pen Test / Parker Kugelschreiber Prüfung bekannt.

**Bestimmung der Thermoformeigenschaften**

Zur Bestimmung der Thermoformeigenschaften der Unterfolie (A) wurde diese auf einer Multivac Maschine (z.B. R245 / SN:166619) unter den Formbedingungen (Formtemperaturen 210 °C, Zeit Anheizen: 2 - 3 s, Explosionsverformung / Druckluftspeicher 2 bar, Formdruck 2 bar, Formen: 2 s) tiefgezogen. Die eingestellten Formate für die herzustellenden Schalen sind der Figur 3 zu entnehmen. Die beiden Eigenschaften, die die Tiefziehbarkeit der erfindungsgemäßen Folie kennzeichnen sind,

- Der maximale Tiefzug in mm der erfindungsgemäßen Unterfolie (= Tiefe der Schale) und das
- Tiefzugverhältnis von $A_{Schale}/A_{Folie}$ ($A_{Schale}$ = Oberfläche der tiefgezogenen Schale, $A_{Folie}$ = Oberfläche der eingesetzten, erfindungsgemäßen, Folie).

**Bestimmung der Barriereeigenschaften**

Die Wasserdampfdurchlässigkeit (WVTR) wurde an unterschiedlich dicken Folien bei 23 °C und 85 % r. F. nach ISO 15106-3 gemessen. Die Messung der Sauerstoffbarriere (OTR) erfolgte mit einem OXTRAN® 100 von Mocon Modern Controls (USA) nach ISO 15105-2, Annex A, 23,0 °C / 50 % r.F. Die Messung der OTR erfolgte dabei ebenfalls an unterschiedlich dicken Folien.

**Siegelnahtfestigkeit (DIN 55529)**

Zur Bestimmung der Siegelnahtfestigkeit der Oberfolie (B) gegenüber sich selbst wurden zwei 15 mm breite Folienstreifen der erfindungsgemäßen Folie aufeinander gelegt und bei 200 °C, einer Zeit von 3 s und einem "Siegeldruck" von 460 N (Gerät: Brugger Typ NDS, einseitig beheizte Siegelbacke) zusammengepresst. Um das Kleben an der Siegelbacke zu vermeiden, wurde eine 12 μm dicke kristalline Polyesterfolie zwischen der erfindungsgemäßen Folie und der Siegelbacke gelegt. Die Siegelnahtfestigkeit (Höchstkraft) wurde unter einem Abzugswinkel von 90 ° (90 °-Peel-Methode) mit einer Geschwindigkeit von 200 mm/min bestimmt.

Zur Bestimmung der Siegelnahtfestigkeit der Oberfolie (B) gegenüber der Unterfolie (A) wurde ein 15 mm breiter Folienstreifen mit der amorphen Seite auf einen gleichgroßen Streifen der Unterfolie (A) gelegt. Die Siegelnahtfestigkeit (Höchstkraft) wurde aufgrund der Steifigkeit des Substrats unter einem Abzugswinkel von 180 ° bestimmt. Von einer Siegelung kann man sprechen, wenn die gemessene Kraft > 1 N/15 mm ist.

Im Folgenden wird die Erfindung anhand von Beispielen näher erläutert.

**Beispiel 1**

**I Herstellung der thermoformbaren Unterfolie (A)**

Es wurde nach dem erfindungsgemäßen Verfahren eine biaxial orientierte Folie (A) aus einem Etylenterephthalat-Ethylenisophthalat-Copolymeren hergestellt. Die Dicke der Folie betrug 96 μm. Dazu wurden Chips aus dem Copolymeren dem Extruder für die Herstellung der Unterfolie zugeführt. Entsprechend den in untenstehender Tabelle aufgeführten Verfahrensbedingungen wurde das Copolymere im Extruder aufgeschmolzen und homogenisiert.

Nach Filtration wurde in einer Breitschlitzdüse die Schmelze ausgeformt und über die Düsenlippe ausgestoßen. Der Schmelzfilm wurde abgekühlt und über eine stufenweise Orientierung in Längs- und Querrichtung mit anschließender Fixierung, eine transparente, einschichtige Folie hergestellt.

Zur Erzielung einer guten Wickelung der Folie wurde zwischen der Längs- und der Querstreckung die Folie mittels Reversgravurverfahren aus einer wässrigen Dispersion heraus beschichtet. Die im Kluppenrahmen acrylisch vernetzte Beschichtung (C) enthält eine 4,5 Gew.-%ige Dispersion eines Latex, bestehend aus einem Copolymeren aus 60 Gew.-% Methylmethacrylat, 35 Gew.-% Ethylacrylat und 5 Gew.-% N-Methylolacrylamid und einem Tensid. Das Trockengewicht der Beschichtung (bezogen auf die biaxial orientierte Folie) betrug ca. 0,035 g/m$^2$.

Das Copolymere für die erfindungsgemäße Unterfolie (A) ist wie folgt zusammengesetzt:

89 Mol-% Ethylenterephthalat-Einheiten,
11 Mol-% Ethylenisophthalat-Einheiten.

Die Herstellungsbedingungen in den einzelnen Verfahrensschritten waren

| | | | |
|---|---|---|---|
| Extrusion | Temperaturen für die Schmelze (A) | 270 | °C |
| | Temperatur der Abzugswalze | 20 | °C |
| Längsstreckung | Aufheiztemperatur der Walzen | 70-90 | °C |
| | Strecktemperatur der Folie | 86 | °C |
| | Längsstreckverhältnis | 3,0 | |
| Querstreckung | Temperatur der Aufheizfelder | 118 | °C |
| | Strecktemperatur der Folie | 135 | °C |
| | Querstreckverhältnis | 3,4 | |
| Fixierung | Temperatur der Folie | 185 | °C |
| | Dauer | 9 | s |

In Tabelle 3 sind die Zusammensetzung der Unterfolie (A), sowie weitere Informationen zur erfindungsgemäßen Folie, insbesondere zu den Eigenschaften der erfindungsgemäßen Folie, dargestellt.

**II Herstellung der heißsiegelbaren und peelfähigen Oberfolie (B)**

Zur Herstellung der nachfolgend beschriebenen, heißsiegelbaren und peelfähigen Oberfolie (B) wurden für die einzelnen, koextrudierten Schichten (B'B"B''') die folgenden Ausgangsmaterialien verwendet

Deckschicht (B'), Mischung aus:

38,0 Gew.-% Polyester I (= Copolymeres aus 78 Mol-% Ethylenterephthalat, 22 Mol-% Ethylenisophthalat) mit einem SV-Wert von 850. Die Glasübergangstemperatur von Polyester I beträgt ca. 75°C. Polyester I enthält desweiteren 5,0 Gew.-% ®Sylysia 430 (synthetisches $SiO_2$, Fuji, Japan) mit einem Partikeldurchmesser von dso = 3,4 μm Das Verhältnis von Partikeldurchmesser $d_{50}$ zu Deckschichtdicke $d_{(A)}$ beträgt 3,4:3.

60 Gew.-% Polyester II (= Copolymeres enthaltend 40 Mol-% Ethylensebazat, 60 Mol-% Ethylentherephthalat,) mit einem SV-Wert von 1000. Die Glasübergangstemperatur von Polyester II beträgt ca. 0°C.

2 Gew.-% antiPET-Polymer (= COC, ®Topas 8007, Ticona, Frankfurt; mit einer $T_G$ von ca. 75°C).

**Basisschicht B″**

100 Gew.-% Polyethylenterephthalat mit einem SV-Wert von 800.

**Deckschicht B‴**

95 Gew.-% Polyethylenterephthalat.

5 Gew.-% 98,5 Gew.-% Polyethylenterephthalat und 1,5 Gew.-% Sylobloc 46.

Die o.g. Rohstoffe wurden in je einem Extruder pro Schicht aufgeschmolzen und durch eine dreischichtige Breitschlitzdüse mit dem Aufbau A-B-C auf eine gekühlte Abzugswalze extrudiert. Die so erhaltene amorphe Vorfolie wurde dann längsverstreckt. Danach wurde die Folie quergestreckt, fixiert und aufgerollt (Enddicke der Folie 42 μm). Die Herstellungsbedingungen in den einzelnen Verfahrensschritten waren

| Extrusion | Temperaturen für die Schmelzen (B'B″B‴) | 270 | °C |
|---|---|---|---|
| | Temperatur der Abzugswalze | 20 | °C |
| Längsstreckung (Spiegelstreckung) | Aufheiztemperatur der Walzen | 80-120 | °C |
| | Strecktemperatur | 115 | °C |
| | Längsstreckverhältnis | 4,0 | |
| Querstreckung | Temperatur der Aufheizfelder | 80-135 | °C |
| | Strecktemperatur | 135 | °C |
| | Querstreckverhältnis | 4,2 | |
| Fixierung | Temperatur | 230 | °C |
| | Dauer | 3 | s |

In der Tabelle 4 sind die Zusammensetzung der Folie, sowie weitere Informationen zur erfindungsgemäßen Folie, insbesondere zu den Eigenschaften der erfindungsgemäßen Folie, dargestellt.

III
Die Unterfolie (A) und die Oberfolie (B) wurden jeweils für sich in eine Multivac-Maschine (R 245/SN:166619) eingespannt. Die Unterfolie (A) wurde unter den Formbedingungen (Formtemperaturen 210 °C, Zeit Anheizen: 2 - 3 s, Explosionsverformung / Druckluftspeicher 2 bar, Formdruck 2 bar, Formen: 2 s) tiefgezogen. Die eingestellten Formate für die herzustellenden Schalen sind der Figur 3 zu entnehmen. Der Tiefzug der Unterfolie (A) betrug bis zu 75 mm, das Tiefzugverhältnis bis zu 2,86.

Die Form wurde abgekühlt und die thermogeformte Unterfolie (A) aus der Form ausgestoßen. Eine Portion Schweinefleisch wurde in den Hohlraum gelegt und die Oberfolie (B) auf die Oberseite der Unterfolie (A) gebracht. Dabei wurde die Oberfolie (B) so auf die Unterfolie (A) gebracht, dass die heißsiegelbare und peelfähige Oberfläche (B') der Oberfolie (B) in Kontakt mit der Portion Fleisch und der Unterfolie (A) war. Die Heißversiegelung wurde auf der gleichen Maschine bei einer Temperatur von 160 °C, 2 s bei einem Druck von 2 bar durchgeführt. Die Portion Fleisch hatte ein Gewicht von etwa 1000 g. Die Packung wurde in einen herkömmlichen Ofen gegeben und bei 220 °C für 60 Minuten gegart. Nach ca. 10 min wurde das gewünschte self-venting beobachtet. Nach Beendigung des Garzyklus wurde die Oberfolie (B) von der Unterfolie (A) der Verpackung manuell abgezogen, ohne dass dabei eine der beiden Folien einriss. Das Fleisch war gegart und kusprig braun geworden.

**Beispiel 2**

Gegenüber Beispiel 1 wurde nur der Herstellprozess für die Unterfolie (A) modifiziert. Die Konvergenz in der Fixierung betrug jetzt 1,75 %, im Beispiel 1 betrug sie 0 %. Das Gesamtresultat war ähnlich, die Durchstoßfestigkeit der Unterfolie (A) war leicht erhöht.

**Vergleichsbeispiel 1**

Im Vergleich zu Beispiel 1 wurde in der Unterfolie (A) der Anteil von Isophthalat auf 5,0 Mol.-% herabgesetzt; sonst alles gleichgelassen.

**Vergleichsbeispiel 2**

Es wurde das Beispiel 1 aus der EP 1 697 129 B1 nachgearbeitet. In Tabelle 4 sind die Eigenschaften der Folie dargestellt. Das Laminat ist für die eingangs genannten Anwendungen geeignet, es ist aber verbesserungswürdig in der Thermoformbarkeit, der Durchstoßfestigkeit, vor allem aber verbesserungswürdig in der Optik (Haze und Clarity).

**Vergleichsbeispiel 3**

Es wurde das Beispiel 1 aus der EP 1 945 512 B1 nachgearbeitet. Das Verfahren ist für die eingangs genannten Anwendungen geeignet; die in der EP 1 945 512 B1 näher beschriebenen Folien sind aber verbesserungswürdig in der Thermoformbarkeit, der Durchstoßfestigkeit, vor allem aber verbesserungswürdig in der Optik (Haze und Clarity).

**Tabelle 3 – Unterfolie (A)**

| | Zusammensetzung Polyester für Folie TS | IS | EG | E-Modul der Folie längs | quer | Flächen E-Modul | σ5-Wert der Folie längs | quer | Summe der σ5-Werte | Dichte | Trübung der Folie | Clarity der Folie | Glanz der Folie A-Seite | B-Seite | Transparenz | SV-Wert der Folie | Durchstoßfestigkeit | Tiefziehfähigkeit Tiefe | $A_{Schale}/A_{Folie}$ | Barriereeigenschaften der Folie (nicht tiefgezogen) OTR | WVTR | Wickelverhalten |
|---|---|---|---|---|---|---|---|---|---|---|---|---|---|---|---|---|---|---|---|---|---|---|
| | Mol-% | | | N/mm² | | | | | | kg/dm³ | % | % | | | % | | N/µm | mm | | cm³/(m² x bar x d) | g/(m² x d) | |
| Beispiele 1 | 89 | 11 | 100 | 3682 | 4117 | 5523 | 98 | 99 | 197 | 1,385 | 0,5 | 100 | 203 | 202 | 90,7 | 780 | 0,395 | 75 | 2,88 | 16 | 1,89 | sehr gut |
| Beispiele 2 | 89 | 11 | 100 | 3843 | 4294 | 5763 | 94 | 103 | 197 | 1,386 | 0,4 | 100 | 204 | 203 | 91 | 777 | 0,398 | 75 | 2,86 | 16 | 1,89 | sehr gut |
| V-Beispiele 1 | 95 | 5 | 100 | 4110 | 4569 | 6146 | 103 | 100 | 203 | 1,392 | 0,4 | 100 | 215 | 214 | 91 | 787 | 0,36 | 55 | 2,00 | | | sehr gut |
| V-Beispiele 2 | 76,2µm PA+ 25,4µm APET | | | | | | | | | | 17 | 75 | 74 | 76 | 88 | | | 65 | 2,00 | | | |
| V-Beispiele 3 | 50 µm Polyester | | | 4175 | 4175 | 5904 | | | | | 5 | | 120 | 120 | 90 | | | 55 | 2,00 | | | |

**Tabelle 4 – Oberfolie (B)**

| | Zusammensetzung Polyester I TS | IS | EG | Zusammensetzung Polyester II SeS | TS | IS | EG | Zusammensetzung Polyester III TS | IS | EG | AntiPET-Polymer COC | Verhältnisse PI/PII/PIII AntiPET-Polymer Gew.-% | Glastemperaturen PI/PII/PIII AntiPET-Polymer °C | Folienaufbau | Foliendicke µm | Deckschicht-Dicken (B') | (B''') µm | Antiblockmittel Durchmesser µm | Konzentration % | Siegelnahtfestigkeit-FIN 160°C | Trübung % | Glanz |
|---|---|---|---|---|---|---|---|---|---|---|---|---|---|---|---|---|---|---|---|---|---|---|
| | Mol-% | | | | | | | Mol-% | | | | | | | | | | | | | | |
| Beispiele 1 | 78 | 22 | 100 | 40 | 60 | | 100 | | | | 100 | 38/60/0/2 | 75/-2/-/75 | B'B''B''' | 42 | 3 | 1,5 | 3,4 | 1,9 | 7 | 13 | 85 |
| Beispiele | 78 | 22 | 100 | 40 | 60 | | 100 | | | | 100 | 38/60/0/2 | 75/-2/-/75 | B'B''B''' | 42 | 3 | 1,5 | 3,4 | 1,9 | 7 | 13 | 85 |
| V-B 1 | | | | | | | | | | | | | | B'B''B''' | 42 | 2,7 | 2 | 3 | 0,075 | 3 | 2,5 | 168 |

TS Terephthalat, IS Isophthalat, EG Ethylen
SeS Sebazat

**Patentansprüche**

1. Transparente Verpackung für die Vakuumverformung, umfassend eine biaxial orientierte, thermoformbare Polyesterfolie als Unterfolie (A) und eine biaxial orientierte Polyesterfolie als Oberfolie (B), die zur Unterfolie (A) heißsiegelbar und peelbar ist, wobei

   I die Unterfolie (A) eine Folie ist, die zu mindestens 85 Gew.-% einen Copolyester umfasst, dessen Dicarbonsäure-Komponenten zu 85 bis 94 Mol-% auf Terephthalsäure abgeleitete Einheiten und zu 6 bis 15 Mol-% auf Isophthalsäure abgeleitete Einheiten zurückzuführen sind, wobei die Folie

   a) einen Flächen-E-Modul im Bereich von 4500 bis 6400 N/mm$^2$, bestimmt gemäß DIN EN ISO 572-1 und -3
   b) eine Summe der Festigkeiten ($\sigma_5$-Wert) in Längsrichtung und in Querrichtung im Bereich von 170 bis 220 MPa, bestimmt gemäß DIN EN ISO 572-1 und -3
   c) eine Durchstoßfestigkeit $F[N] > 0{,}35 \cdot d[\mu m]$, d = Dicke der Folie, bestimmt gemäße EN 14477
   d) eine Dichte von kleiner 1395 kg/m$^3$, bestimmt gemäße ASTM-D 1505-68, Methode C
   e) eine Trübung von weniger als 2,0 %, bestimmt gemäße ASTM-D 1003-61, Methode A, und eine Clarity von mindestens 85 %, bestimmt gemäß ASTM-D 1003 und
   f) eine Dicke im Bereich von 50 bis 300 $\mu$m, aufweist; und

   II die Oberfolie (B) eine Folie ist, die eine Basisschicht (B") und eine gegenüber der Unterfolie (A) heißsiegelfähige und peelbare Deckschicht (B') aufweist, wobei die heißsiegelfähige und peelbare Deckschicht (B')

   a) zu mindestens 60 Gew.-%, aus einem Polyester aufgebaut ist, der aus 25 bis 95 Mol-% an Einheiten aufgebaut ist, die auf mindestens eine aromatische Dicarbonsäure und 5 bis 75 Mol-% an Einheiten, die auf mindestens eine aliphatische Dicarbonsäure zurückgehen, wobei die Summe der dicarbonsäureabgeleiteten Molprozente 100 ergibt; und
   b) bis zu 10 Gew.-% anorganische und/oder organische Partikel mit einem mittleren Durchmesser $d_{50}$ von 1,5 bis 5,0 $\mu$m enthält, bestimmt gemäß Beschreibung unter Messmethoden, Mittlerer Partikeldurchmessers $d_{50}$, wobei das Verhältnis aus Teilchengröße $d_{50}$ und Schichtdicke der Deckschicht (B') größer 1,0 ist; und
   c) die Schichtdicke der Deckschicht (B') 1,5 bis 5,0 $\mu$m beträgt;
   und wobei die Oberfolie (B)

   - eine Trübung von weniger als 20 % bestimmt gemäße ASTM-D 1003-61, Methode A, und eine Clarity von mindestens 70 %, bestimmt gemäß ASTM-D 1003, besitzt,
   - eine Siegelnahtfestigkeit zu sich selbst (= Finsiegelung) und zur Unterfolie (A) aufweist, die im Bereich von 2 bis 10 N/15 mm liegt, enthält, bestimmt gemäß Beschreibung unter Messmethoden, Siegelnahtfestigkeit, und
   - eine Dicke im Bereich von 20 bis 125 $\mu$m, aufweist.

2. Transparente Verpackung nach Anspruch 1, wobei die Unterfolie (A) und/oder die Basisschicht (B") einen oder mehrere Radikalfänger enthält.

3. Transparente Verpackung nach Anspruch 2, wobei der/die Radikalfänger aus der Gruppe der phenolischen Antioxidantien ausgewählt ist/sind, bevorzugt aus der Gruppe bestehend aus pentaerythritol tetrakis [3-(3,5-di-tert-butyl-4-hydroxyphenyl)-propionate] und 1,3,5-Trimethyl-2,4,6-tris(3,5-di-tert-butyl-4-hydroxybenzyl)-benzol).

4. Transparente Verpackung nach einem oder mehreren der Ansprüche 1 bis 3, wobei der Polyester für die Deckschicht (B') die folgenden Dicarboxylate und Alkylene, jeweils bezogen auf die Gesamtdicarboxylat- bzw. Gesamtalkylenmenge enthält:

   25 bis 95 Mol-%Terephthalat,
   0 bis 25 Mol-% Isophthalat,
   5 bis 75 Mol -% Sebazat,
   0 bis 50 Mol-% Adipat;

   mehr als 30 Mol -% Ethylen oder Butylen.

5. Transparente Verpackung nach einem oder mehreren der Ansprüche 1 bis 4, wobei die Deckschicht (B') aus zwei physikalisch mischbaren Polyestern I und II und besonders bevorzugt aus drei physikalisch mischbaren Polyestern I, II und III hergestellt ist.

6. Transparente Verpackung nach Anspruch 5, wobei der Polyester I die folgenden Dicarboxylate und Alkylene, jeweils bezogen auf die Gesamtdicarboxylat- bzw. Gesamtalkylenmenge, enthält:

   • 60 bis 100 Mol-% Terephthalat,
   • 0 bis 40 Mol-% Isophthalat,
   wobei sich die Mol-%-Angaben der angeführten Dicarbonsäuren immer zu 100 % ergänzen,
   • mehr als 50 Mol-% Ethyleneinheiten.

7. Transparente Verpackung nach Anspruch 5 oder 6, wobei der Polyester II die folgenden Dicarboxylate und Alkylene, jeweils bezogen auf die Gesamtdicarboxylat- bzw. Gesamtalkylenmenge, enthält:

   • 20 bis 70 Mol -% Sebazat,
   • 0 bis 50 Mol-% Adipat,
   • 10 bis 80 Mol-% Terephthalat,
   • 0 bis 30 Mol-% Isophthalat,
   wobei sich die Mol-%-Angaben der angeführten Dicarbonsäuren immer zu 100 % ergänzen,
   • mehr als 30 Mol-% Ethylen oder Butylen.

8. Transparente Verpackung nach Anspruch 5, 6 oder 7 wobei der Polyester III die folgenden Dicarboxylate und Alkylene, jeweils bezogen auf die Gesamtdicarboxylat- bzw. Gesamtalkylenmenge, enthält:

   • 80 bis 98 Mol-% Terephthalat,
   • 2 bis 20 Mol-% Isophthalat,
   wobei sich die Mol-%-Angaben der angeführten Dicarbonsäuren immer zu 100 % ergänzen,
   • mehr als 50 Mol-% Ethyleneinheiten.

9. Transparente Verpackung nach einem oder mehreren der Ansprüche 5 bis 8, wobei der Anteil des Polyesters I in der Deckschicht (B')10 bis 60 Gew.-% beträgt.

10. Transparente Verpackung nach einem oder mehreren der Ansprüche 5 bis 9, wobei der Anteil von Polyester II in der Deckschicht (B') 20 bis 70 Gew.-% beträgt.

11. Transparente Verpackung nach einem oder mehreren der Ansprüche 5 bis 10, wobei der Anteil des Polyesters III, in der Deckschicht (B') 0 bis 15 Gew.-% beträgt.

12. Verfahren zur Herstellung einer transparenten Verpackung für die Vakuumverformung nach einem oder mehreren der Ansprüche 1 bis 11, **gekennzeichnet durch**

   - Herstellung der Unterfolie durch Extrusion (Herstellung von Schicht (A)) oder Koextrusion, biaxiales Strecken der Unterfolie (A) in Längsrichtung bei einer Temperatur zwischen 70 ° und 100 °C (die Aufheiztemperaturen der Walzen betragen 60 bis 110 °C) mit einem Längsstreckverhältnis von 2,0:1 bis 4,0:1, und in Querrichtung bei einer Temperatur zwischen 70 ° und 120 °C (Film Temperatur: 60 bis 110 °C) mit einem Querstreckverhältnis von 2,2:1 bis 3,8:1, sowie Thermofixierung für 5 bis 25 s bei 175° bis 220 °C;
   - Koextrusion der den einzelnen Schichten (B'B" und, falls vorhanden, B‴) der Oberfolie (B) entsprechenden Schmelzen durch eine Flachdüse, Abziehen der so erhaltene Folie auf einer oder mehreren Walzen zur Verfestigung, und anschließende biaxiale Streckung und Thermofixierung der Folie.

13. Verwendung der transparenten Verpackung für die Vakuumverformung nach einem oder mehreren der Ansprüche 1 bis 11 als Menüschale, insbesondere für Fleisch, Fisch, Geflügel und trockene (Fertig-) Produkte wie Sandwiches, Burger oder Wraps.

**Claims**

1. Transparent packaging for vacuum forming, comprising a biaxially oriented, thermoformable polyester film as lower film (A) and a biaxially oriented polyester film as upper film (B), which is heat-sealable and peelable in relation to the lower film (A),
where

   I the lower film (A) is a film which comprises at least 85 % by weight of a copolyester in which 85 to 94 mol% of the dicarboxylic acid components are based on terephthalic-acid-derived units and 6 to 15 mol% of the dicarboxylic acid components are based on isophthalic-acid-derived units, where the film

   a) has an area modulus of elasticity in the range 4500 to 6400 $N/mm^2$, determined in accordance with DIN EN ISO 572-1 and -3
   b) has a sum of strength values ($\sigma_5$ value) in longitudinal direction and in transverse direction in the range 170 to 220 MPa, determined in accordance with DIN EN ISO 572-1 and -3
   c) has a puncture resistance $F[N] > 0.35 \cdot d[\mu m]$, d = film thickness, determined in accordance with EN 14477
   d) has a density below 1395 $kg/m^3$, determined in accordance with ASTM D1505-68, Method C
   e) has a haze below 2.0 %, determined in accordance with ASTM D1003-61, Method A, and clarity at least 85 %, determined in accordance with ASTM D1003, and
   f) has a thickness in the range 50 to 300 $\mu$m; and

   II the upper film (B) is a film which has a base layer (B") and an outer layer (B') which is heat-sealable and peelable in relation to the lower film (A), where the heat-sealable and peelable outer layer (B')

   a) is composed of at least 60 % by weight of a polyester which is composed of 25 to 95 mol% of units based on at least one aromatic dicarboxylic acid and 5 to 75 mol% of units based on at least one aliphatic dicarboxylic acid, where the sum of the dicarboxylic-acid-derived molar percentages is 100; and
   b) comprises up to 10 % by weight of inorganic and/or organic particles with median diameter $d_{50}$ 1.5 to 5.0 $\mu$m, determined in accordance with the description under Test methods, Median particle diameter $d_{50}$, where the ratio of particle size $d_{50}$ to thickness of the outer layer (B') is above 1.0; and
   c) the thickness of the outer layer (B') is 1.5 to 5.0 $\mu$m;
   and where the upper film (B)

   - has a haze below 20 %, determined in accordance with ASTM D1003-61, Method A, and clarity of at least 70 %, determined in accordance with ASTM D1003,
   - has a seal seam strength in relation to itself (fin sealing) and in relation to the lower film (A) which is in the range 2 to 10 N/15 mm, determined in accordance with the description under Test methods, Seam seal strength, and
   - has a thickness in the range 20 to 125 $\mu$m.

2. Transparent packaging according to Claim 1, where the lower film (A) and/or the base layer (B") comprise(s) one or more radical-scavengers.

3. Transparent packaging according to Claim 2, where the radical-scavenger(s) is/are selected from the group of the phenolic antioxidants, preferably from the group consisting of pentaerythritol tetrakis[3-(3,5-di-tert-butyl-4-hydroxyphenyl) propionate) and 1,3,5-trimethyl-2,4,6-tris(3,5-di-tert-butyl-4-hydroxybenzyl)benzene).

4. Transparent packaging according to one or more of Claims 1 to 3, where the polyester for the outer layer (B') comprises the following dicarboxylates and alkylenes, based in each case on the total quantity of dicarboxylate and, respectively, total quantity of alkylene:

   25 to 95 mol% of terephthalate,
   0 to 25 mol% of isophthalate,
   5 to 75 mol% of sebacate,
   0 to 50 mol% of adipate;

   more than 30 mol% of ethylene or butylene.

5. Transparent packaging according to one or more of Claims 1 to 4, where the outer layer (B') has been produced from two physically miscible polyesters I and II, and particularly preferably from three physically miscible polyesters I, II and III.

6. Transparent packaging according to Claim 5, where the polyester I comprises the following dicarboxylates and alkylenes, based in each case on the total quantity of dicarboxylate and, respectively, total quantity of alkylene:

  • 60 to 100 mol% of terephthalate,
  • 0 to 40 mol% of isophthalate,
  where the mol% data of the dicarboxylic acids mentioned always give a total of 100 %,
  • more than 50 mol% of ethylene units.

7. Transparent packaging according to Claim 5 or 6, where the polyester II comprises the following dicarboxylates and alkylenes, based in each case on the total quantity of dicarboxylate and, respectively, the total quantity of alkylene:

  • 20 to 70 mol% of sebacate,
  • 0 to 50 mol% of adipate,
  • 10 to 80 mol% of terephthalate,
  • 0 to 30 mol% of isophthalate,
  where the mol% data of the dicarboxylic acids mentioned always give a total of 100 %,
  • more than 30 mol% of ethylene or butylene.

8. Transparent packaging according to Claim 5, 6 or 7, where the polyester III comprises the following dicarboxylates and alkylenes, based in each case on the total quantity of dicarboxylate and, respectively, total quantity of alkylene:

  • 80 to 98 mol% of terephthalate,
  • 2 to 20 mol% of isophthalate,
  where the mol% data of the dicarboxylic acids mentioned always give a total of 100 %,
  • more than 50 mol% of ethylene units.

9. Transparent packaging according to one or more of Claims 5 to 8, where the proportion of the polyester I in the outer layer (B') is 10 to 60 % by weight.

10. Transparent packaging according to one or more of Claims 5 to 9, where the proportion of polyester II in the outer layer (B') is 20 to 70 % by weight.

11. Transparent packaging according to one or more of Claims 5 to 10, where the proportion of the polyester III in the outer layer (B') is 0 to 15 % by weight.

12. Process for the production of transparent packaging for vacuum forming according to one or more of Claims 1 to 11, **characterized by**

  - production of the lower film by extrusion (production of layer (A)) or coextrusion, biaxial stretching of the lower film (A) in longitudinal direction at a temperature between 70 ° and 100 °C (the heating temperatures of the rolls being 60 to 110 °C) with longitudinal stretching ratio 2.0:1 to 4.0:1, and in transverse direction at a temperature between 70 ° and 120 °C (film temperature: 60 to 110 °C) with transverse stretching ratio 2.2:1 to 3.8:1, and also heat-setting for 5 to 25 s at 175 ° to 220 °C;
  - coextrusion of the melts corresponding to the individual layers (B'B" and, if present, B‴) of the upper film (B) through a flatfilm die, take-off of the resultant film on one or more rolls for solidification, and subsequent biaxial stretching and heat-setting of the film.

13. Use of the transparent packaging for vacuum forming according to one or more of Claims 1 to 11 as tray, in particular for meat, fish, poultry and dry (ready-to-eat) products, such as sandwiches, burgers or wraps.

**Revendications**

1. Emballage transparent pour déformation sous vide, comportant un film en polyester orienté biaxialement et thermoscellable comme film inférieur (A) et un film en polyester orienté biaxialement comme film supérieur (B), qui est thermosoudable et pelable vis-à-vis du film inférieur (A),
dans lequel

I le film inférieur (A) est un film comprenant au moins 85 % en poids d'un copolyester dont les composants acide dicarboxylique sont constitués de 85 à 94 % en moles de motifs dérivés de l'acide téréphtalique et de 6 à 15 % en moles de motifs dérivés de l'acide isophtalique, dans lequel le film présente

a) un module d'élasticité de surface dans la plage de 4500 à 6400 N/mm², déterminé selon DIN EN ISO 527-1 et -3
b) une somme des résistances (valeur $\sigma_5$) dans le sens longitudinal et dans le sens transversal dans la plage de 170 à 220 MPa, déterminées selon DIN EN ISO 527-1 et -3
c) une résistance à la perforation $F[N] > 0,35 \cdot d[\mu m]$, d = épaisseur du film, déterminée selon EN 14477
d) une densité de moins de 1395 kg/m³, déterminée selon ASTM-D 1505-68, méthode C
e) un voile de moins de 2,0 %, déterminé selon ASTM-D 1003-61, méthode A, et une netteté d'au moins 85 %, déterminée selon ASTM-D 1003 et
f) une épaisseur dans la plage de 50 à 300 $\mu$m; et

II le film supérieur (B) est un film qui comporte une couche de base (B") et une couche de recouvrement (B') thermosoudable et pelable vis-à-vis du film inférieur (A), dans lequel la couche de recouvrement (B') thermosoudable et pelable

a) est composé d'au moins 60 % en poids d'un polyester, qui est composé de 25 à 95 % en moles de motifs dérivés d'au moins un acide dicarboxylique aromatique, et de 5 à 75 % en moles de motifs dérivés d'au moins un acide dicarboxylique aliphatique, dans lequel la somme des pourcentages en moles provenant de l'acide dicarboxylique est de 100; et
b) contient jusqu'à 10% en poids de particules inorganiques et/ou organiques avec un diamètre moyen $d_{50}$ de 1,5 à 5,0 $\mu$m, déterminé selon la description sous méthodes de mesure, diamètre moyen des particules $d_{50}$, en allemand: 'Mittlerer Partikeldurchmessers', dans lequel le rapport entre la taille des particules $d_{50}$ et l'épaisseur de la couche de recouvrement (B') est supérieur à 1,0; et
c) l'épaisseur de la couche de recouvrement (B') est de 1,5 à 5,0 $\mu$m;
et dans lequel le film supérieur (B) présente

- un voile de moins de 20 %, déterminé selon ASTM-D 1003-61, méthode A, et une netteté d'au moins 70 %, déterminée selon ASTM-D 1003,
- une résistance des joints de scellage vis-à-vis d'elle-même (= sceau de finition) et vis-à-vis du film inférieur (A) dans la plage de 2 à 10 N/15 mm, déterminé selon la description sous méthodes de mesure, résistance des joints de scellage, en allemand: 'Siegelnahtfestigkeit', et
- une épaisseur dans la plage de 20 à 125 $\mu$m.

2. Emballage transparent selon la revendication 1, dans lequel le film inférieur (A) et/ou la couche de base (B") contient un ou plusieurs piégeurs de radicaux.

3. Emballage transparent selon la revendication 2, dans lequel le/les piégeur(s) de radicaux est/sont choisi(s) dans le groupe antioxydants phénoliques, de préférence dans le groupe le groupe constitué du pentaérythritol tetrakis [3-(3,5-di-tert-butyl-4-hydroxyphenyl)-propionate] et 1,3,5-triméthyl-2,4,6-tris(3,5-di-tert-butyl-4-hydroxybenzyl)-benzol).

4. Emballage transparent selon une ou plusieurs des revendications de 1 à 3, dans lequel le polyester pour la couche de recouvrement (B') contient les dicarboxylates et alkylènes suivants, à chaque fois basé sur la quantité totale de dicarboxylate ou la quantité totale d'alkylène:

25 à 95 % en moles de téréphtalate,
0 à 25 % en moles d'isophthalate,
5 à 75 % en moles de sébaçate,
0 à 50 % en moles d'adipate;

plus de 30 % en moles d'éthylène ou de butylène.

**5.** Emballage transparent selon une ou plusieurs des revendications de 1 à 4, dans lequel la couche de recouvrement (B') est fabriqué à partir de deux polyesters physiquement miscibles I et II, et de manière particulièrement préférée de trois polyesters physiquement miscibles I, II et III.

**6.** Emballage transparent selon la revendication 5, dans lequel le polyester I contient les dicarboxylates et alkylènes suivants, à chaque fois basé sur la quantité totale de dicarboxylate ou la quantité totale d'alkylène:

• 60 à 100 % en moles de téréphtalate,
• 0 à 40 % en moles d'isophthalate,
dans lequel les % en moles donnés pour les acides dicarboxyliques énumérés s'élèvent toujours à 100 %,
• plus de 50 % en moles de motifs d'éthylène.

**7.** Emballage transparent selon la revendication 5 ou 6, dans lequel le polyester II contient les dicarboxylates et alkylènes suivants, à chaque fois basé sur la quantité totale de dicarboxylate ou la quantité totale d'alkylène:

• 20 à 70 % en moles de sébaçate,
• 0 à 50 % en moles d'adipate,
• 10 à 80 % en moles de téréphtalate,
• 0 à 30 % en moles d'isophthalate,
dans lequel les % en moles donnés pour les acides dicarboxyliques énumérés s'élèvent toujours à 100 %,
• plus de 30 % en moles d'éthylène ou de butylène.

**8.** Emballage transparent selon la revendication 5, 6 ou 7 dans lequel le polyester III contient les dicarboxylates et alkylènes suivants, à chaque fois basé sur la quantité totale de dicarboxylate ou la quantité totale d'alkylène:

• 80 à 98 % en moles de téréphtalate,
• 2 à 20 % en moles d'isophthalate,
dans lequel les % en moles donnés pour les acides dicarboxyliques énumérés s'élèvent toujours à 100 %,
• plus de 50 % en moles de motifs d'éthylène.

**9.** Emballage transparent selon une ou plusieurs des revendications de 5 à 8, dans lequel la proportion du polyester I dans la couche de recouvrement (B') est de 10 à 60 % en poids.

**10.** Emballage transparent selon une ou plusieurs des revendications de 5 à 9, dans lequel la proportion du polyester II dans la couche de recouvrement (B') est de 20 à 70 % en poids.

**11.** Emballage transparent selon une ou plusieurs des revendications de 5 à 10, dans lequel la proportion du polyester III dans la couche de recouvrement (B') est de 0 à 15 % en poids.

**12.** Procédé de fabrication d'un emballage transparent pour déformation sous vide selon une ou plusieurs des revendications de 1 à 11, **caractérisé par**

- fabrication du film inférieur par extrusion (Fabrication de la couche (A)) ou coextrusion, étirement biaxial du film inférieur (A) dans le sens longitudinal à une température entre 70° et 100 °C (les températures de chauffage des rouleaux sont de 60 à 110 °C) avec un rapport d'étirement longitudinal de 2,0:1 à 4,0:1, et dans le sens transversal à une température entre 70 ° et 120 °C (température du film: 60 à 110 °C) avec un rapport d'étirement transversal de 2,2:1 à 3,8:1, et thermofixage pendant 5 à 25 s à 175 ° à 220 °C;
- coextrusion des fontes correspondant aux couches individuelles (B'B" et, le cas échéant, B''') du film supérieur (B) à travers une buse plate, rétraction du film ainsi obtenu sur un ou plusieurs rouleaux afin de le solidifier, et puis étirement biaxial et thermofixage du film.

**13.** Utilisation de l'emballage transparent pour déformation sous vide selon une ou plusieurs des revendications de 1 à 11 comme plateau de repas, en particulier pour la viande, le poisson, la volaille et les produits secs (finis) comme les sandwichs, les hamburgers ou les wraps.

**Figur 1**

Oberfolie (B)

Deckschicht (B')

Unterfolie (A)

**Figur 2**

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1697129 B1
- EP 1471098 A1
- DE 10318102 A1
- EP 1945512 B1
- WO 2018004558 A
- EP 1475228 B1
- EP 1697129 A

- EP 2810776 A1
- EP 1068949 A
- JP 5009319 A
- EP 0283164 A
- EP 0407870 A
- EP 0485893 A
- EP 0503422 A

**In der Beschreibung aufgeführte Nicht-Patentliteratur**

- **AHLHAUS, O.E.** Verpackung mit Kunststoffen. Carl Hanser Verlag, 1997, 271